# EUROPÄISCHE PATENTSCHRIFT

(11) **EP 1 930 059 B1**
(45) Veröffentlichungstag und Bekanntmachung des Hinweises auf die Patenterteilung: **15.05.2013**
(21) Anmeldenummer: 07118553.2
(22) Anmeldetag: 16.10.2007
(51) Int. Cl.: B01D 45/16, B01D 50/00

(54) **Tropfenabscheider**
Droplet separator
Pare-goutte

(30) Priorität: 13.11.2006 EP 06123900
(43) Veröffentlichungstag der Anmeldung: 11.06.2008
(73) Patentinhaber: Sulzer Chemtech AG, 8404 Winterthur (CH)
(72) Erfinder: Egger, Daniel, 8405, Winterthur (CH)
(74) Vertreter: Sulzer Management AG

(56) Entgegenhaltungen:
- EP-A2- 0 203 896
- WO-A-01/80975
- WO-A-2004/009210
- WO-A1-99/52617
- GB-A- 2 063 098
- US-A- 4 818 257
- US-A1- 4 516 994

## Beschreibung

Die Erfindung betrifft einen Tropfenabscheider sowie einen wirbelerzeugenden Apparateteil zu einem Tropfenabscheider insbesondere für einen schnell fliessenden Gasstrom. Sie bezieht sich auch auf einen Tropfenabscheider mit wirbelerzeugenden Apparateteilen.

Aus der EP-A- 0 048 508 ist ein Tropfenabscheider bekannt, der einen wirbelerzeugenden Apparateteil für einen schnell fliessenden Gasstrom oder eine Mehrzahl von Modulen mit jeweils einem derartigen Apparateteil umfasst. Die Module oder ein Teil der Module werden parallel betrieben. Sie sind jeweils durch Wandungen gegenüber benachbarten Modulen getrennt. Innerhalb jeder solchen Modulwandung ist eine innere Mantelfläche mit dem wirbelerzeugenden Apparateteil angeordnet. Die innere Mantelfläche weist eine horizontale Eintrittsfläche auf. Stromabwärts folgen Leitflächen, die in dem die innere Mantelfläche durchfliessenden Gasstrom eine Rotation der Strömung um eine Zentralachse induzieren. Die Zentralachse ist vertikal gerichtet. Aus der rotierenden Strömung wird Flüssigkeit, die vom Gasstrom in Tropfenform mitgeführt wird, durch die zentrifugal wirkenden Trägheitskräfte auf der inneren Oberfläche der inneren Mantelfläche abgeschieden. Es sind in der inneren Mantelfläche Schlitze vorgesehen, durch welche die abgeschiedene Flüssigkeit in einen Sammelraum zwischen Modulwandung und innerer Mantelfläche und von dort durch Ablauflaufrohre nach unten weiter transportiert wird. Ein grosser Teil des Gasstroms passiert als Hauptstrom die innere Mantelfläche, während ein kleiner Teil als Nebenstrom zusammen mit der abgeschiedenen Flüssigkeit in den Sammelraum eintritt und nach einer Trennung von der Flüssigkeit wieder mit dem Hauptstrom vereinigt wird. Die Leitflächen sind aus einzelnen Blechstücken zu einer relativ aufwändigen und daher teuren Schweisskonstruktion zusammengesetzt.

Aus der W02004/073836 ist ein weiterer Tropfenabscheider bekannt, der aus ähnlichen Modulen, wie der Tropfenabscheider gemäss EP-A- 0 048 508 aufgebaut ist. Der Tropfenabscheider besteht aus einem Rohrstück an dessen Eintritt Leitbleche angeordnet sind, die eine Wirbelströmung induzieren. Mittels der Leitbleche wird der eintretende Gasstrom in eine starke Rotation gebracht, wobei Flüssigkeitströpfchen durch die Zentrifugalkraft nach aussen, also in Richtung der Wandung eines Rohrstücks geschleudert werden und dort als Flüssigkeitsfilm abgeschieden werden. Der Hauptteil der Rohrströmung tritt oberhalb durch den Austrittsquerschnitt aus, der einen gegenüber dem Eintrittsquerschnitt verringerten Durchmesser aufweist. Die Flüssigkeit an der Wandung des Rohrstücks tritt zusammen mit einem Teilstrom des Gases durch Schlitze, die auf der Mantelfläche des Rohrstücks angeordnet sind, in einen um das Rohrstück angeordneten Ringkanal aus und sammelt sich durch Gravitation auf dem Kolonnenboden an, von wo sie durch Ablaufrohre weggeführt wird. Der weitestgehend flüssigkeitsfreie Gasteilstrom wird durch kleine Öffnungen in einer Deckplatte mit dem Gashauptstrom wiedervereinigt. Die Querschnittsfläche dieser Öffnungen bestimmt dabei die Gasmenge des Teilstromes.

US4516994 beschreibt ein Filterelement zur Abscheidung von Öltröpfchen aus einem Gasstrom. Das Gas/Ölgemisch wird durch ein Eintrittsrohr, welches mit Leitelementen ausgestattet ist, hindurch geleitet und gelangt anschliessend zu einem porösen hohlzylindrischen Filterelement, welches das Eintrittsrohr konzentrisch umgibt.

Eine ähnliche Anordnung wird in der W02004/00921 0 A1 oder der WO01/80975 A1 vorgeschlagen. Auch hier findet sich ein Eintrittsrohr innerhalb vom Filterelement eingenommenen Raum. Das Eintrittsrohr der WO01/80975 A1 ist als Vorfilter ausgebildet. Hierdurch wird ein zweistufiges Filterelement erhalten. Das Vorfilter dient der Grobabscheidung und ist als austauschbares Verbrauchselement ausgestaltet.

Die US 4,818,257 beschreibt einen Tropfenabscheider mit einem Strömungskanal, durch welchen ein tröpfchenbeladenes Gas hindurch leitbar ist. Um den Strömungskanal herum ist ein Abscheideelement mit einer inneren Mantelfläche angeordnet, die im wesentlichen den Durchmesser des Strömungskanals aufweist. Die Mantelfläche verfügt über Öffnungen für den Eintritt des tröpfchenbeladenen Gases in das Abscheideelement. Das Abscheideelement erstreckt sich über die Länge des Strömungskanals und umfasst eine Mehrzahl von gitterartigen Strukturen.

Aufgabe der Erfindung ist es, einen Tropfenabscheider zu schaffen, mittels dessen eine verbesserte Abscheidung insbesondere kleiner Tröpfchen erzielbar ist.

Der Tropfenabscheider umfasst einen Strömungskanal, durch welchen ein tröpfchenbeladenes Gas hindurch leitbar ist und entlang einer Hauptströmungsrichtung von diesem tröpfchenbeladenen Gas durchströmbar ist, wobei ein Abscheideelement, das im wesentlichen ringförmig um den Strömungskanal angeordnet ist, und eine innere Mantelfläche hat, im wesentlichen den Durchmesser des Strömungskanals aufweist, und Öffnungen für den Eintritt des tröpfchenbeladenen Gases in das Abscheideelement umfasst, wobei sich das Abscheideelement zumindest über einen Teil der Länge des Strömungskanals erstreckt, wobei das Abscheideelement eine Mehrzahl von gitterartigen Strukturen umfasst. Ein wirbelerzeugender Apparateteil ist im Inneren des den Strömungskanal ausbildenden Elements angeordnet und enthält Leitflächen, mittels welchen das tröpfchenbeladene Gas in eine Rotationsbewegung gebracht und die Tröpfchen durch Zentrifugalkraft in Richtung des Abscheideelements leitbar sind. Mittels den Leitflächen ist zumindest ein Teil des tröpfchenbeladenen Gases von der Hauptströmungsrichtung in Richtung der Öffnungen umlenkbar. Durch die Rotationsbewegung wird somit eine Geschwindigkeitskomponente in radialer und tangentialer Richtung zur Hauptströmungsrichtung erzeugt, wodurch es zur Umlenkung zumindest eines Teils des tröpfchenbeladenen Gases kommt.

Erfindungsgemäss sind die Leitflächen des wirbelerzeugenden Apparateteils innerhalb eines Rohrstücks stromaufwärts der inneren Mantelfläche um eine in Hauptströmungsrichtung ausgerichtete Zentralachse angeordnet, wobei die Leitflächen eine Eintrittsfläche ausbilden, wobei stromabwärts zur Eintrittsfläche für den durch die Leitflächen umgelenkten Gasstrom eine ringförmige Austrittsfläche vorgesehen ist. Die Leitflächen sind aus einem ebenen Blech mittels spaltförmigen Durchbrüchen erzeugt.

Das Abscheideelement ist von dem tröpfchenbeladenen Gas von der inneren Mantelfläche in Richtung Wandung in einer Strömungsrichtung, die einen Winkel grösser (>) 0°und kleiner (<) 180° zur Hauptströmungsrichtung einschliesst, durchströmbar.

Das Abscheideelement umfasst Abschnitte und/oder ist aus mehreren in Hauptströmungsrichtung hintereinander geschalteten Modulen von Abscheideelementen zusammengesetzt, wobei zumindest ein Teil des umgelenkten Gases durch einen zum wirbelerzeugenden Apparateteil benachbart liegenden Abschnitt und/oder Modul des Abscheideelements einleitbar ist, wobei ein weiterer Teil des umgelenkten Gases durch einem vom wirbelerzeugenden Apparateteil entfernten Abschnitt und/oder Modul des Abscheideelements leitbar ist.

Die gitterartigen Strukturen sind zwischen der inneren Mantelfläche und einer äusseren Wandung im wesentlichen parallel zur inneren Mantelfläche und/oder der äusseren Wandung ringförmig angeordnet.

Die gitterartigen Strukturen nach einem weiteren Ausführungsbeispiel sind zwischen der inneren Mantelfläche und einer äusseren Wandung in einem Winkel zur inneren Mantelfläche und/oder der äusseren Wandung angeordnet, wobei der Winkel vorzugsweise zwischen 30° und 70°, insbesondere zwischen 45 ° und 60 ° liegt. Die innere Mantelfläche und/oder die äussere Wandung kann ebenfalls gitterartige Strukturen umfassen. Jede der zu einem Abscheideelement gehörigen gitterartigen Strukturen wird durch eine im wesentlichen senkrecht zur Hauptströmungsrichtung angeordnete Bodenplatte gehalten. Benachbarte Abscheideelemente sind durch die Bodenplatten trennbar. Durch derartige Bodenplatten kann Flüssigkeit von jedem Abscheideelement separat abgezogen werden, sodass vermieden wird, dass bereits in der Abscheidung befindliche Flüssigkeit wieder vom Gasstrom mitgerissen werden kann. Jede der Bodenplatten kann Sammelmittel umfassen. Einerseits kann die Bodenplatte selbst als Sammelraum ausgebildet sein, sodass der Bodenplatte die Funktion eines Sammelmittels zukommt, andererseits können Sammelmittel als in ein Abflussrohr mündende flüssigkeitsfördernde Strukturen, wie beispielsweise Kanäle, ausgestaltet sein, wodurch die in allen Abscheideelementen anfallende Flüssigkeit mittels der Sammelmittel in zumindest ein Abflussrohr eingeleitet wird und über einen an einem Ende des Abflussrohrs angeordneten Austrittstutzen abgezogen wird.

Im Gasstrom stromaufwärts vor den wirbelerzeugenden Apparateteilen kann mindestens eine Matte zur Tropfenkoaleszenz vorgelagert sein, in der kleinste Tröpfchen auf benetzbaren Oberflächen abscheidbar sind und aufgrund von durch die Gasströmung erzeugten Scherkräften in gröberer Form wieder in den Gasstrom frei setzbar sind.

Alle Leitflächen schliessen mit der Eintrittsfläche einen Neigungswinkel ein, der grösser als 20° und kleiner als 70° ist, vorzugsweise zwischen 45° und 65° liegt. Der Neigungswinkel ist entlang der Kante von dem Rohrstück zur Zentralachse veränderlich.

Ein wirbelerzeugender Apparateteil ist in einem Tropfenabscheider für einen schnell fliessenden Gasstrom angeordnet. Der Tropfenabscheider umfasst eine innere Mantelfläche um eine in Hauptströmungsrichtung ausgerichtete Zentralachse. Stromaufwärts des Tropfenabscheiders ist die innere Mantelfläche als Rohrstück ausgestaltet. Die Leitflächen des wirbelerzeugenden Apparateteils sind an der Innenwand des Rohrstücks, welches um eine in Hauptströmungsrichtung ausgerichtete Zentralachse angeordnet ist, angebracht, wobei die Leitflächen eine Eintrittsfläche ausbilden, wobei stromabwärts zur Eintrittsfläche für den durch die Leitflächen umgelenkten Gasstrom eine ringförmige Austrittsfläche vorgesehen ist.

Ein Umlenkkörper kann auf der Zentralachse angeordnet sein, sodass sich die ringförmige Austrittsfläche um den auf der Zentralachse angeordneten Umlenkkörper und der inneren Wand der inneren Mantelfläche erstreckt.

Die Leitflächen sind vorzugsweise zwischen einem inneren Kreis, sowie einem äusseren Kreis um die Zentralachse angeordnet, wobei die Austrittsfläche kleiner als die Ringfläche zwischen den beiden Kreisen ist, so dass im Gasstrom aufgrund einer kombinierten Einwirkung durch den Umlenkkörper und die Leitflächen eine Rotationsströmung um die Zentralachse induzierbar ist. Die Leitflächen sind jeweils um zwei Torsionspunkte stromabwärts aus einer Ebene gebogen.

Auf dem äusseren Kreis ist eine Hälfte der Torsionspunkte auf einem ersten regulären Polygon, die andere Hälfte der Torsionspunkte auf dem inneren Kreis auf einem zweiten regulären Polygon angeordnet.. Die spaltförmigen Durchbrüche sind beispielsweise mittels eines Laserschneidverfahrens, durch Drahterodieren oder durch Stanzen hergestellt. Die Torsionspunkte haben jeweils einen umgebenden Raum, welcher die spaltförmigen Durchbrüche benachbarter Leitflächen trennt.

Der Durchmesser des äusseren Kreises hat einen Wert zwischen 50 und 300 mm, vorzugsweise zwischen 150 und 250 mm.

Der Umlenkkörper ist kegel- oder plattenförmig ausgestaltet und die durch den Umlenkkörper bestimmte Austrittsfläche ist um mindestens 20 % kleiner als die Eintrittsfläche, vorzugsweise um 30 - 40 % kleiner.

Die Anzahl der Leitflächen ist grösser als 3 und kleiner als 13, vorzugsweise beträgt sie 6, 8 oder 10.

Alle Leitflächen schliessen mit der Eintrittsfläche einen Neigungswinkel ein, der grösser als 20° und kleiner als 70° ist, vorzugsweise zwischen 45° und 65° liegt.

Nach einem weiteren Ausführungsbeispiel ist jede Leitfläche gekrümmt oder weist mindestens zwei ebene Teilflächen auf, die gegeneinander geneigt sind. Mit einer solchen Formgebung ist die Bewegung des Gasstroms günstiger beeinflussbar als mit ebenen Leitflächen, insbesondere hinsichtlich des Verhältnisses zwischen Drallerzeugung und Druckabfall zwischen den genannten Ein- und Austrittsöffnungen.

Der Umlenkkörper ist vorzugsweise kegelförmig ausgestaltet und weist einen Kegelwinkel auf, der zu den oberen Kanten der Leitflächen passt, die durch radiale Abschnitte der spaltförmigen Durchbrüche erzeugt sind, so dass sich in dem zentralen, von der Austrittsfläche umschlossenen Bereich jeweils eine Kontaktlinie zwischen dem Umlenkkörper und den Kanten ergibt.

Tropfenabscheider in dieser Bauweise werden insbesondere in Trennkolonnen verwendet, in welchen Flüssig/Gasgemische getrennt werden oder in Absorptionskolonnen, in welchen ein Kontakt zwischen einer flüssigen Phase und einem Gas erfolgt, wodurch es zum Stoffaustausch kommen kann.

Anders als beim wirbelerzeugenden Apparateteil gemäss EP-A- 0 048 508 sind die Leitflächen kurz; in der Draufsicht in Achsrichtung überlappen sich die Leitflächen nicht. Früher nahm man an, dass mit kurzen Leitflächen eine trennwirksame Strömung nicht möglich sei. Entgegen dieser Annahme hat sich ergeben, dass auch kurze Leitflächen den erforderlichen Effekt hervor bringen, wenn es im Strömungsweg stromabwärts des wirbelerzeugenden Apparateteils zu einer lokalen Verringerung der Gasgeschwindigkeit kommt, welche durch eine Vergrösserung des durchströmten Gasquerschnitts bezogen auf den Eintrittsquerschnitt kommt. Daher kann eine der relativ einfachen erfindungsgemässen Konstruktionen des Abscheideelements mit Erfolg verwendet werden.

Nachfolgend wird die Erfindung anhand der Zeichnungen erläutert. Es zeigen:
- Fig. 1: einen Tropfenabscheider mit wirbelerzeugendem Apparateteil,
- Fig. 2: einen Tropfenabscheider mit wirbelerzeugendem Apparateteil nach einem zweiten Ausführungsbeispiel
- Fig. 3: ein Detail eines Abscheideelements nach einem der in Fig. 2 dargestellten Ausführungsbeispiele
- Fig. 4: einen Tropfenabscheider nach einem weiteren Ausführungsbeispiel
- Fig. 5: eine Strömungs-Leitstruktur mit Leitflächen und einem kegelförmigen Umlenkkörper, die einen wirbelerzeugenden Apparateteil gemäss der Erfindung bildet,
- Fig. 6: ein vorbearbeitetes Blechstück mit in einer Ebene liegenden Leitflächen, das durch einen weiteren Arbeitsschritt in eine Strömungs-Leitstruktur für den erfindungsgemässen Apparateteil umformbar ist,
- Fig. 7: das teilweise umgeformte Blechstück der Fig. 6 und
- Fig. 8: dasselbe Blechstück mit dem kegelförmigen Umlenkkörper und einer Andeutung der Gasströmung durch Pfeile.
- Fig. 9: eine Strömungs-Leitstruktur nach einem weiteren Ausführungsbeispiel im Aufriss
- Fig. 10: die Strömungs-Leitstruktur der Fig. 9
- Fig. 11: eine Darstellung des Verhältnisses von Gasgeschwindigkeit/mittlerer Gasgeschwindigkeit in Abhängigkeit von der Höhe des Tropfenabscheiders
- Fig. 12: eine Darstellung des Verhältnisses von Flüssigkeitsbeladung/mittlerer Flüssigkeitsbeladung in Abhängigkeit von der Höhe des Tropfenabscheiders
- Fig. 13: eine Darstellung des Druckverlustwiderstandsbeiwerts in Abhängigkeit vom Anstellwinkel der Leitflächen

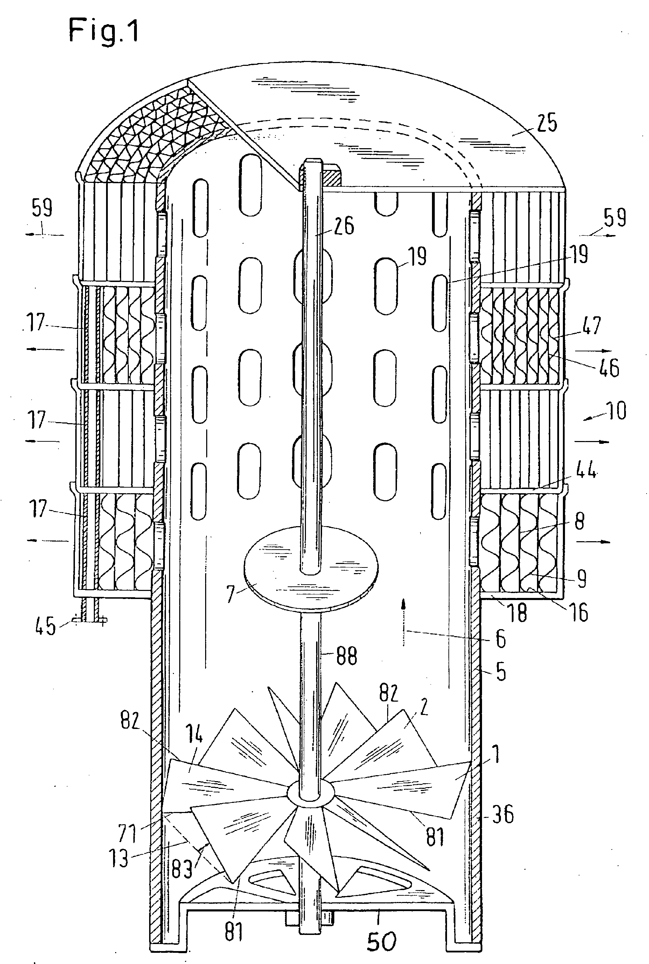

Fig. 1 zeigt einen nicht von den Ansprüchen umfassten Tropfenabscheider 10 umfassend einen Strömungskanal 5, durch welchen ein tröpfchenbeladenes Gas entlang einer Hauptströmungsrichtung 6 hindurch geleitet wird. Wie nachstehend gezeigt wird, kann die Strömungsrichtung der Gasmoleküle und der mitgeführten Flüssigkeit sich wesentlich von der angegebenen Hauptströmungsrichtung 6 unterscheiden. Die Angabe der Hauptströmungsrichtung dient als Referenzangabe zur Erklärung verschiedener in dem Tropfenabscheider anzutreffender Besonderheiten der Gasströmung. Mit dem Begriff Gasströmung soll dabei auch die Strömung von mit dem Gas mitgerissenen Flüssigkeitströpfchen umfasst sein, die sich gerade bei hohen Gasgeschwindigkeiten nicht durch Einwirkung der Schwerkraft vom Gas trennen lassen, da die Wirkung der Schwerkraft auf die Tröpfchen gegenüber den Kräften, die durch die Gasbewegung in Hauptströmungsrichtung auf die Flüssigkeitstropfen wirken, nicht ausreicht, um eine Fallbewegung eines Tropfens entgegen der Hauptströmungsrichtung 6 zu ermöglichen, wodurch eine Abscheidung des Tropfens erfolgen würde. Der Strömungskanal 5 wird von diesem tröpfchenbeladenen Gas durchströmt, wobei ein wirbelerzeugender Apparateteil 1 vorgesehen ist, mittels welchem das tröpfchenbeladene Gas in Richtung eines Abscheideelements 8 geleitet wird. Mittels des wirbelerzeugenden Apparateteils wird der Strömung eine Richtungsänderung aufgezwungen, wodurch die Geschwindigkeit der Gas-und Flüssigkeitsteilchen eine Radialkomponente erhält. Durch diese Radialkomponente wird der Gasstrom in Richtung der inneren Mantelfläche umgeleitet. Der Gasstrom 59 tritt dann in im wesentlichen radialer Richtung aus dem Abscheideelement aus. Ein Teil der Flüssigkeitströpfchen kann dabei bereits durch die zusätzliche Radialkomponente der auf den Tropfen wirkenden Kraft auf die innere Mantelfläche auftreffen und abgeschieden werden. An der inneren Mantelfläche sind Öffnungen (15, 19) angebracht, durch welche der flüssigkeitsbefrachtete Gasstrom aus dem Strömungskanal austreten kann. Ein Abscheideelement 8 ist im wesentlichen ringförmig um den Strömungskanal 5 angeordnet, wobei seine innere Mantelfläche, die im wesentlichen den Durchmesser des Strömungskanals 5 aufweist, die Öffnungen (15,19) für den Eintritt des tröpfchenbeladenen Gases in das Abscheideelement umfasst. Das Abscheideelement 8 erstreckt sich zumindest über einen Teil der Länge des Strömungskanals 5. In Fig. 1 sind beispielsweise vier Abscheideelemente 8 übereinander angeordnet. Ein Abscheideelement 8 umfasst eine Mehrzahl von gitterartigen Strukturen 9. Diese gitterartigen Strukturen können beispielsweise durch ein Drahtgeflecht gebildet werden. Alternativ dazu kann ein Gestrick oder ein Gewebe zum Einsatz kommen. Alternativ dazu ist die gitterartige Struktur 9 aus regellos zueinander angeordneten Elementen aufgebaut, wie sie beispielsweise in einer filzartigen Struktur vorliegen. Eine derartige gasdurchlässige Struktur ist mit Strukturen aus zylindrischen Gitterelementen kombinierbar, sodass einerseits ein Abstand zwischen benachbarten zylindrischen Strukturen 46 erhalten wird und andererseits im Raum zwischen den zylindrischen Strukturen eine Koaleszenz von Tröpfchen erfolgen kann, die dann auf die zylindrischen Strukturen auftreffen und dort entlang ebendieser zylindrischen Strukturen in Richtung eines Sammelraums 16 geleitet werden. Wenn der Gasstrom durch die gitterartige Struktur 9 hindurchströmt, setzen sich die Flüssigkeitströpfchen an der Oberfläche der gitterartigen Struktur 9 ab und koaleszieren zu Flüssigkeitströpfchen ausreichender Grösse, die entlang der gitterartigen Struktur 9 in Richtung des als Sammelraum 16 ausgebildeten Bodens des Abscheideelements 8 rieseln. Für die Anordnung von gitterartigen Strukturen 9 im Abscheideelement 8 haben sich eine Reihe von Ausführungsformen bewährt. In Fig. 1 sind beispielsweise abwechselnd zylindrische Strukturen 46 und wellenförmige Strukturen 47 gezeigt. Im zuunterst gezeichneten Abscheideelement sind die zylindrischen Strukturen in Richtung der Hauptströmung 6 angeordnet, das heisst in der Fig. 1 in vertikaler Richtung gezeichnet. Zwischen zwei zylindrischen, das heisst, aus zylindrischen Elementen ausgestalteten Strukturen 46, ist jeweils eine wellenförmige Struktur 47 angeordnet. Mit der nachfolgend als wellenförmige Struktur bezeichneten Struktur soll ein zylindrisches Element gemeint sein, dessen Oberfläche in der Abwicklung nicht eben, sondern wellenförmig, zickzackförmig oder mit anderen, Wölbungen oder Einbuchtungen versehen ist. Im Querschnitt des in der Fig. 1 zuunterst angeordneten Abscheideelements ist die wellenförmige Struktur 47 im Schnitt ersichtlich, das heisst, dass benachbarte Wellenberge derselben wellenförmigen Struktur im wesentlichen untereinander zu liegen kommen. Die Wellen der wellenartigen Struktur verlaufen dann in einem Winkel zur Horizontalrichtung, insbesondere in Hauptströmungsrichtung, das heisst in der Fig. 1 in Vertikalrichtung. Eine horizontale Anordnung der Wellen hat sich hingegen als nachteilig erwiesen, da Flüssigkeit, die an der Berührungslinie zwischen der wellenartigen Struktur 47 und der zylindrischen Struktur 46 in diesem Fall nicht abfliessen kann. Diese sich stauende Flüssigkeit wird aber dann mit dem Gasstrom mitgerissen, sodass in diesem Fall weniger Flüssigkeit abgeschieden wird, weil bereits abgeschiedene Flüssigkeit mit dem Gasstrom mitgerissen wird.

Aus diesem Grund ist es vorteilhaft, wenn die wellenartigen Strukturen 47 derart angeordnet sind, dass sich ein Gefälle ausbilden kann, sodass die an den gitterartigen Strukturen koaleszierende Flüssigkeit abfliessen kann. In dem darüber gezeigten Abscheideelement ist eine gitterartige Struktur mit abwechselnd zylindrischen Strukturen 46 und abwechselnd wellenförmigen Strukturen 47 gezeigt, in welchen benachbarte Wellenberge im wesentlichen nebeneinander zu liegen kommen. Hierdurch liegen die Berührungslinien zwischen der wellenartigen Struktur 47 und der zylindrischen Struktur 46 im wesentlichen in der Vertikalrichtung. Alternativ zu diesen beiden dargestellten Ausrichtungen der wellenförmigen Strukturen ist eine abschnittsweise Winkelausrichtung der wellenförmigen Strukturen möglich, solange gewährleistet ist, dass die koaleszierende Flüssigkeit abfliessen kann. Zusätzlich wird durch die abwechselnde Verwendung von wellenartigen und zylindrischen Strukturen erreicht, dass die zylindrischen Strukturen in einem Abstand zueinander angeordnet werden. Somit werden im Abscheideelement Bereiche erzeugt, die frei von jeglichen Strukturen sind. Wird der freie Volumenanteil verkleinert, kann bei gleichem Flüssigkeitsanteil im Gas weniger Gas durchströmen, gleichzeitig können aber mehr der kleinen Tröpfchen abgetrennt werden.

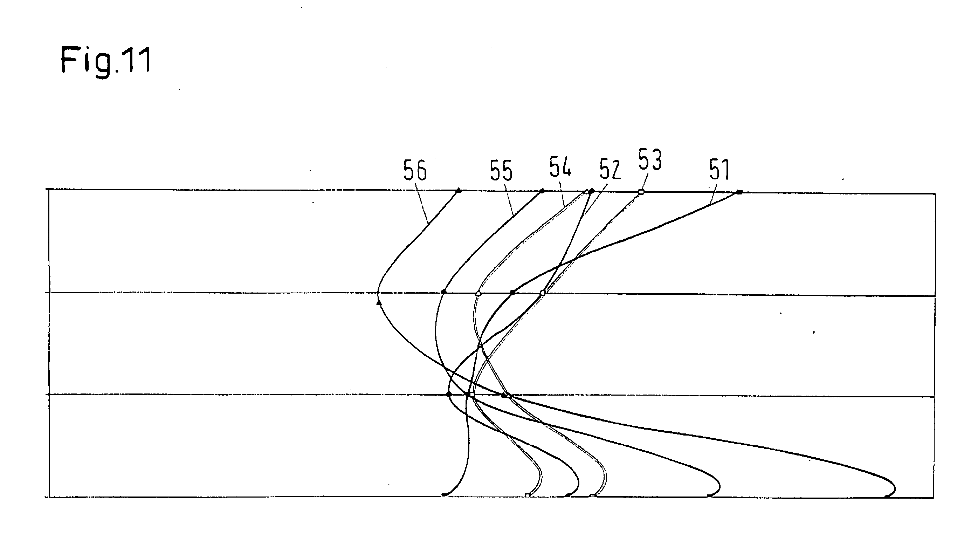

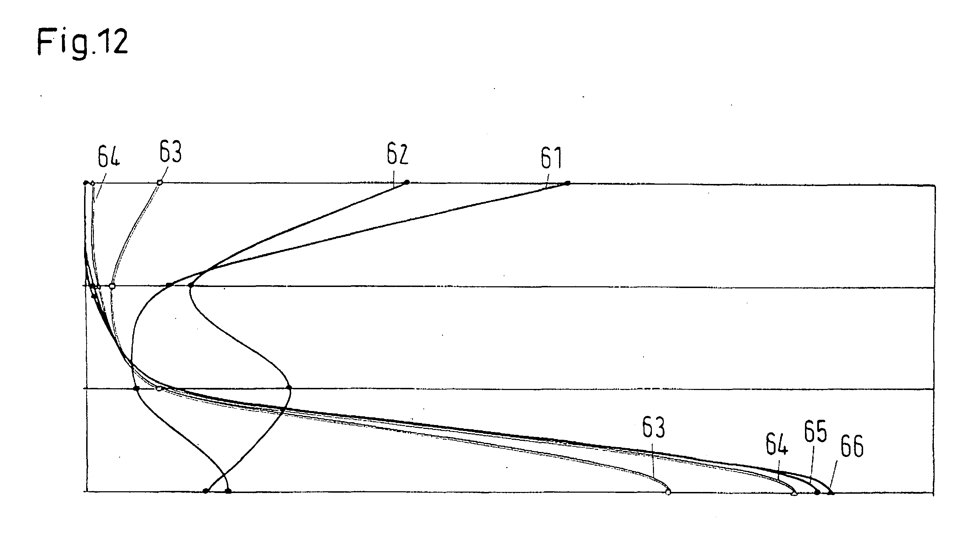

Der Hauptvorteil der Verwendung von zylindrischen Strukturen 46 liegt darin begründet, dass die Flüssigkeit an den Gitterelementen nicht nur koalesziert, sondern auch in Richtung des Sammelraums abfliessen kann. Ein weiterer Vorteil der zylindrischen Gitterelemente ist deren relativ unkomplizierte Fertigung, sowie deren Stabilität. Die wellenförmigen Strukturen 47 übernehmen die Funktion eines Abstandhalters zu den zylindrischen Strukturen. Ein weiterer Vorteil ist die erhöhte Formstabilität des Abscheideelements durch die Verstärkungsfunktion der zylindrischen Strukturen, sodass mehrere Abscheideelemente gleicher oder verschiedener Bauart, wie in Fig. 1 gezeigt, übereinander modulartig gestapelt werden können. Die Höhe des Stapels von Abscheideelementen ist davon abhängig, wie viel Gas durch den Tropfenabscheider 10 geführt wird, aber auch die Grössenverteilung der Tröpfchen im Gas am Eintritt in den Tropfenabscheider beschaffen ist. Bei einer sehr breiten Verteilung mit stark voneinander abweichenden Tropfengrössen wird eine grössere Bauhöhe oder ein Stapel von mehreren übereinander angeordneten Abscheideelementen 8 erforderlich sein. In diesem Fall werden die grossen Tropfen im wesentlichen durch das Abscheideelement 8 ausgetragen, das in nächster Nähe zum wirbelerzeugenden Apparateteil 1 angeordnet ist, während die kleinen, leichten Tröpfchen eine weitere Strecke gemeinsam mit dem Gasstrom zurücklegen, sodass sie erst in weiter entfernten Abscheideelementen 8 ausgetragen werden. Hierzu können auch Abscheideelemente 8 mit gitterartigen Strukturen 9 von verschiedenem Typus kombiniert werden. Die gitterartigen Strukturen unterscheiden sich beispielsweise in der Grösse der Durchtrittsöffnungen, sodass in Analogie zu einer Sieb- oder Filterstruktur, Strukturen unterschiedlicher Durchlässigkeit in einem Tropfenabscheider kombinierbar sind. Hierzu können beispielsweise Gewebe unterschiedlicher Feinheit zum Einsatz kommen. Trotz dieser Massnahmen kann bei einem derartigen Tropfenabscheider nicht verhindert werden, dass ein Gas, welches den Strömungskanal 5 im wesentlichen in Hauptströmungsrichtung 6 durchströmt, hauptsächlich durch die zuoberst angeordneten Abscheideelemente 8 ausgetragen wird. Hierzu soll in der Folge in der Diskussion der Fig. 11 und Fig. 12 noch genauer eingegangen werden. Daher wird ein wirbelerzeugender Apparateteil 1 stromaufwärts des/der Abscheideelemente vorgesehen. Mittels des wirbelerzeugenden Apparateteils wird ein Strömungsprofil über die gesamte Höhe eines Stapels von Abscheideelementen 8, das sich deutlich von einem Strömungsprofil ohne ein derartigen wirbelerzeugenden Apparateteil 1 unterscheidet, weil durch die aufgeprägte Rotationsbewegung ein grösserer Anteil der Gasströmung in das oder die dem Gaseintrittsquerschnitt benachbart, also in den Zeichnungen zuunterst angeordneten Abscheideelemente eingetragen wird, wie nachfolgend in Fig. 11 oder Fig. 12 gezeigt wird. Hierbei soll der Begriff zuunterst, der zur Beschreibung der Anordnungen gemäss der Fig. verwendet wird, zur Beschreibung der räumlichen Lage der Abscheideelemente in den Zeichnungen verwendet werden. Dieser Begriff ist aber nicht so zu verstehen, dass Anordnungen, in welchen die Zentralachse nicht im wesentlichen vertikale Richtung aufweist, in irgendeiner Weise ausgeschlossen sein sollen. Insbesondere wird in dieses/diese zuunterst angeordneten Abscheideelemente ein Gasstrom eingeleitet, der vermehrt die grossen Tröpfchen des Tropfenspektrums enthält, während die kleinen Tröpfchen des Tropfenspektrums vermehrt in den vom wirbelerzeugenden Apparateteil am weitesten entfernten Abscheideelement oder in den am weitesten entfernten Teil des Abscheideelements - sollte nur ein einziges Abscheideelement vorgesehen werden - ausgetragen werden.

Der wirbelerzeugende Apparateteil 1 ist im Inneren des Strömungskanals 5 angeordnet und enthält eine Leitfläche 2, wodurch zumindest ein Teil des Gases von der Hauptströmungsrichtung 6 in Richtung der Öffnungen (15,19) umlenkbar ist. Die Leitflächen 2 des wirbelerzeugenden Apparateteils 1 sind innerhalb eines Rohrstücks 36 stromaufwärts der inneren Mantelfläche 12 um eine in Hauptströmungsrichtung 6 ausgerichtete Zentralachse 26 angeordnet. Die Leitflächen 2 bilden eine Eintrittsfläche 13 aus, wobei parallel zur Eintrittsfläche 13 und stromabwärts für den durch die Leitflächen 2 umgelenkten Gasstrom eine ringförmige Austrittsfläche 14 vorgesehen ist. Nach dem in Fig. 1 dargestellten Ausführungsbeispiel sind die Leitflächen direkt an einer Stange 88 befestigt, welche entlang der Zentralachse 26 angeordnet ist. Die Eintrittsfläche 13 wird durch die Kanten 71 der Leitflächen 2 aufgespannt. Bei der Eintrittsfläche 13 kann es sich um eine Kegelfläche handeln, wobei die Spitze des Kegels in der Zentralachse 26 zu liegen kommt. Die Austrittsfläche 14 wird durch die Kanten 82 der Leitflächen 2 gebildet. Die Leitflächen 2 schliessen mit einer Ebene, die normal zur Hauptströmungsrichtung 6 ausgerichtet ist, einen Neigungswinkel 83 ein, der grösser als 20° und kleiner als 70° ist, vorzugsweise zwischen 45° und 65° liegt. Der Neigungswinkel kann sich entlang der Kante 81 vom Rohrstück 36 bis zur Zentralachse 26 verändern, wenn die Leitflächen 2 eine Krümmung aufweisen. Eine derartige Krümmung kann vorteilhaft sein, wenn die Strömungsumlenkung an verschiedenen Orten im Innenraum des Rohrstücks 36 unterschiedlich stark ausfallen soll. Beispielsweise kann der Neigungswinkel 83 in einem zentralachsennahen Bereich des Rohrstücks geringer sein, das heisst, die Leitflächen 2 flacher angeordnet sein, als in einem wandnahen Bereich des Rohrstücks 36. Der wirbelerzeugende Apparateteil 1 wird von der Stange 88 im Strömungskanal 5 gehalten. Diese Stange 88 ist an ihrem unteren Ende an einem Stützelement 50 befestigt, sodass sie in einer zentralen Position im Strömungskanal 5 gehalten werden kann.

Zusätzlich zu dem wirbelerzeugenden Apparateteil können im Strömungskanal 5 weitere Umlenkelemente 7 vorgesehen sein. Insbesondere können um die Zentralachse 26 des Tropfenabscheiders 10 scheibenförmige Umlenkelemente 7 angeordnet sein. Ein derartiges scheibenförmiges Umlenkelement dient der Verbesserung der Strömungsführung und erlaubt es, weitere Verbesserungen hinsichtlich des Ausnutzungsgrades der Oberfläche der Abscheideelemente 8 zu erzielen. Sind mehrere derartige scheibenförmige Umlenkelemente 7 übereinander angeordnet, können diese im Durchmesser, sowie in ihrer Ausführung unterschiedlich ausgestaltet sein. Die Darstellung eines scheibenförmigen Umlenkelements 7 ist dabei keineswegs als Einschränkung zu sehen, je nach Durchmesser des Strömungskanals 5 und der Gasgeschwindigkeit kann es vorteilhaft sein, als Umlenkelemente Leitelemente vorzusehen, die beispielsweise ähnlich der Leitflächen 2 ausgestaltet sein können oder schraubenförmige, spiralförmige oder andere stromteilende und/oder eine die Strömung umlenkende Form aufweisen.

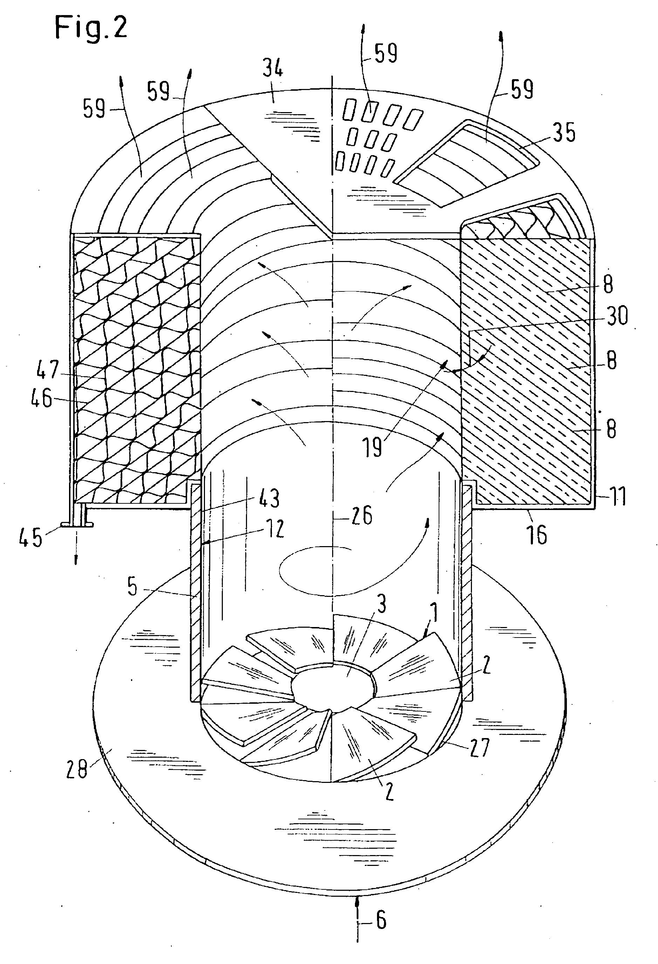

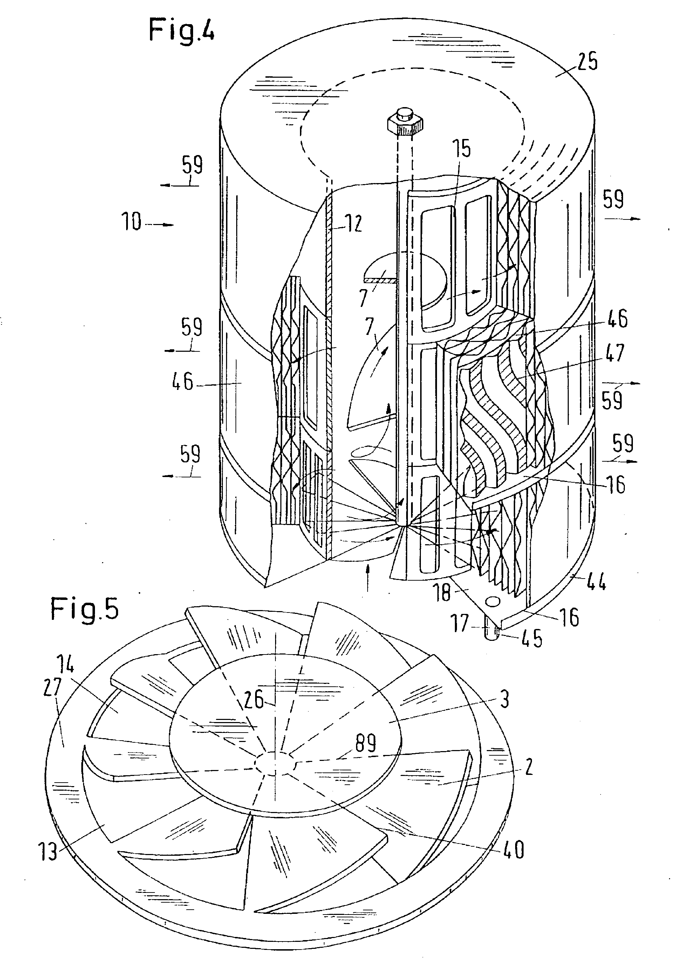

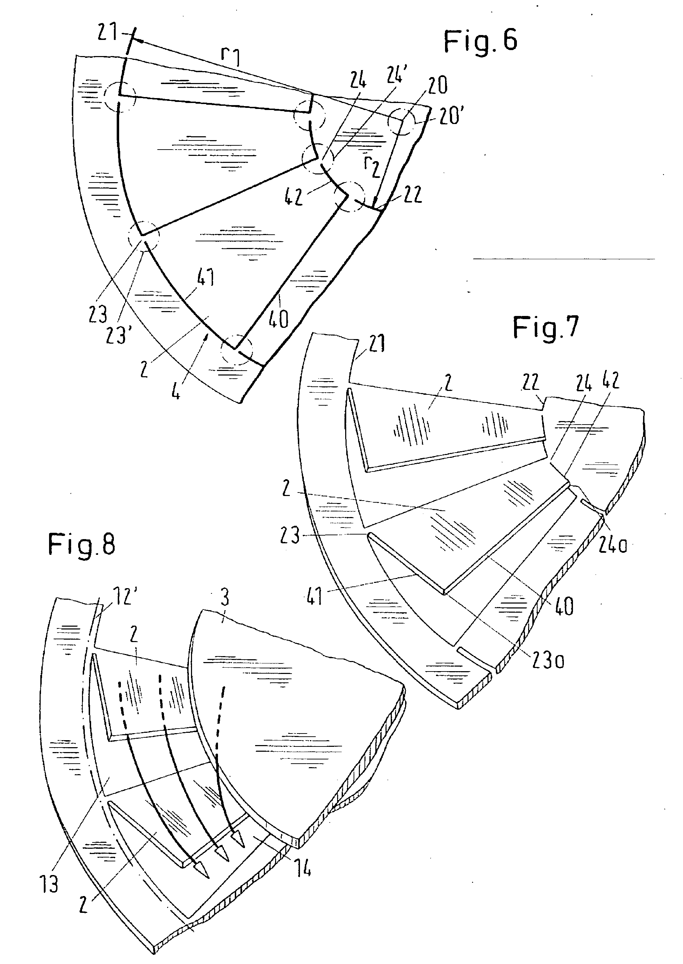

Ein Tropfenabscheider nach einem zweiten Ausführungsbeispiel ist in Fig. 2 gezeigt. Im Unterschied zu dem in Fig. 1 dargestellten Ausführungsbeispiel ist gemäss dieses Ausführungsbeispiels eine entlang der Zentralachse 26 verlaufende Stange 88 nicht erforderlich. Der Strömungskanal 5 ist in dieser Darstellung im Bereich der Abscheideelemente 8 ohne Einbauten gezeigt. Die Hauptströmungsrichtung 6 des flüssigkeitsbefrachteten Gases, welches in den Tropfenabscheider 10 eintreten soll, liegt in der dargestellten Pfeilrichtung. Der Tropfenabscheider 10 umfasst ein insbesondere zylindrisch ausgestaltetes Rohrstück mit einer inneren Mantelfläche 12. Das Rohrstück ist stromaufwärts der Abscheideelemente 8 angeordnet. Am in Fig. 1 dargestellten unteren Ende dieses Rohrstücks ist ein wirbelerzeugender Apparateteil 1 angeordnet, der in Fig. 5 genauer dargestellt ist. Der wirbelerzeugende Apparateteil umfasst einen äusseren Ring 27, der als Kreis 21 ausgebildet ist. Der äussere Ring 27 ist Bestandteil des Kolonnenbodens 28. Der wirbelerzeugende Apparateteil 1 wird nach einem bevorzugten Ausführungsbeispiel aus dem Kolonnenboden gestanzt oder mittels eines Schneidverfahrens, insbesondere eines Laserschneidverfahrens aus dem Kolonnenboden 28 geschnitten. Eine detailliertere Beschreibung eines bevorzugten Verfahrens zur Herstellung eines wirbelerzeugenden Apparateteils 1 erfolgt in der Beschreibung der Fig. 6 bis 8. Das Rohrstück mit der inneren Mantelfläche 12 wird dann über den Kolonnenboden 28 mit dem intgrierten wirbelerzeugenden Apparateteil 1 gestülpt, sodass der wirbelerzeugende Apparateteil genau am Eintritt in dieses Rohrstück gelegen ist. Die aus der Ebene des Kolonnenbodens 28 geklappten Leitflächen 2 können dabei als Positionierhilfsmittel Verwendung finden, mittels welchen eine Zentrierung und Positionierung des Rohrstücks 36 vorgenommen werden kann. Anstatt der dargestellten Anschlussverbindung an den Kolonnenboden 28 mit dem Strömungskanal 5 kann auch eine Flanschverbindung der beiden genannten Bauteile vorgesehen sein, insbesondere wenn eine Kolonne kleinen Durchmessers verwendet wird und der Tropfenabscheider am Kopf der Kolonne angeordnet ist. Der äussere Ring 27 kommt in diesem Fall zwischen die beiden Flanschteile zu liegen. Eine derartige Flanschverbindung von zwei, einen Strömungskanal ausbildenden Elementen (5, 28) ist dem Fachmann bekannt und daher nicht zeichnerisch dargestellt.

Der äussere Ring 27 umschliesst eine Mehrzahl von Leitflächen 2, die zumindest teilweise einen Winkel zur Hauptströmungsrichtung 6 einschliessen. Das tröpfchenbeladene Gas trifft in Hauptströmungsrichtung 6 auf die Leitflächen 2 auf, wird entlang der Oberfläche der Leitflächen zwangsgeführt, sodass der Strömung eine radiale und tangentiale Geschwindigkeitskomponente aufgeprägt wird. Die Leitflächen 2 sind untereinander über einen, vorzugsweise zentral angeordneten, rotationssymmetrischen Umlenkkörper 3 verbunden. Gemäss Fig. 2 ist der Umlenkkörper 3 als kreisförmige Scheibe ausgebildet. Die Scheibe weist einen inneren Kreis 22 auf, der gleichzeitig die innere Begrenzungslinie der Leitflächen 2 darstellt. Im einfachsten Fall sind die Leitflächen 2 eben, und bestehen aus Sektorelementen mit einem äusseren Radius, der dem Radius des Kreises 21 entspricht und einem inneren Radius, der dem Radius des Kreises 22 entspricht. Werden die Sektorelemente längs ihrer Sektorkanten, sowie längs eines Teils der dem Sektor zugehörigen Kante des inneren Kreises 22 sowie des äusseren Kreises 21 durchtrennt und aus der ebenen Oberfläche herausgekippt, ergibt sich ein wirbelerzeugender Apparateteil 1 einfachster Bauart. In Fig. 5 ist ein Beispiel eines verbesserten wirbelerzeugenden Apparateteils dargestellt, dessen Leitflächen auf einem kegelförmigen Umlenkkörper 3 aufliegen und somit eine höhere Formstabilität erreichbar ist. Die Leitflächen sind insbesondere mittels eines Schneidverfahrens oder Stanzverfahrens aus dem scheibenförmigen Rohling herstellbar. Im Anschluss an das Durchtrennen des Materials zum Erhalt der Sektorelemente werden diese aus der Scheibenfläche ausgelenkt, sodass sich eine Durchtrittsöffnung für das Gas ergibt.

Der durch den wirbelerzeugenden Apparateteil umgelenkte Gasstrom bewegt sich in Richtung der inneren Mantelfläche 12, die in diesem Fall durch Eintrittsöffnungen in zumindest ein Abscheideelement 8 einer zweiten Bauart gebildet wird. Im vorliegenden Fall ist beispielhaft ein Stapel von drei übereinander angeordneten Abscheideelementen 8 dargestellt. Die innere Mantelfläche wird dabei vom inneren Umfang der Abscheideelemente gebildet, sodass auf die in Fig. 1 erforderliche innere Mantelfläche 12 mit Öffnungen 19 verzichtet werden kann.

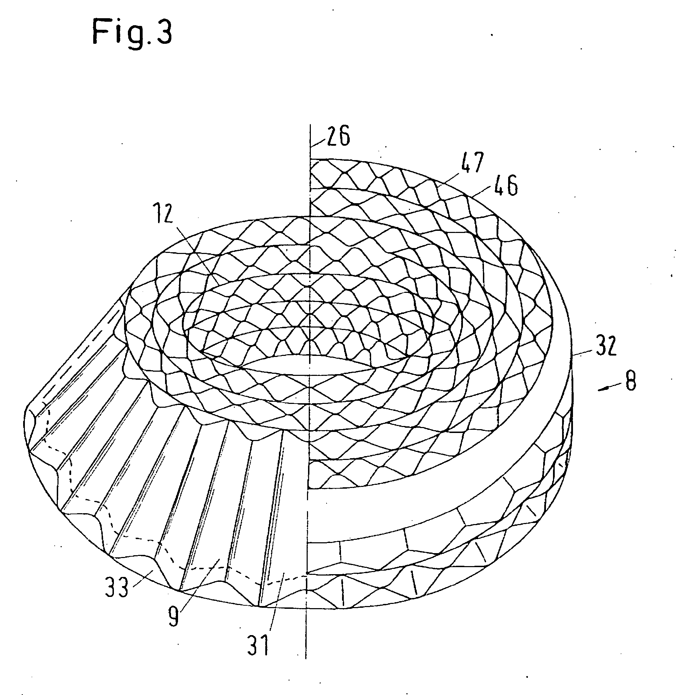

Das Abscheideelement 8 für einen Tropfenabscheider 10 gemäss Fig. 3 umfasst mehrere konisch angeordnete Lagen 31 aus gasdurchlässigen Strukturen 9, die insbesondere als gitterartige Strukturen ausgebildet sein können. Die Spitze eines derartigen Konus würde bei einem kreiszylindrischen Querschnitt auf der Zentralachse 26 liegen. Die gitterartigen Strukturen zwischen der inneren Mantelfläche 12 oder deren gedachten Fortsetzung und einer Wandung 11 sind in einem Winkel 30 zur inneren Mantelfläche 12 und/oder Wandung 11 angeordnet, wobei der Winkel 30 vorzugsweise zwischen 30° und 70°, insbesondere zwischen 45° und 60°liegt. Der Winkel 30 ist in der Schnittdarstellung der Fig. 2 ersichtlich. Die Lagen 32 weisen eine einfache konische Oberfläche und die Lagen 31 eine konische Oberfläche mit überlagerten wellenartigen oder vergleichbaren kanalbildenden Strukturen auf. Lagen 32 und Lagen 31 können in abwechselnder Reihenfolge angeordnet sein, alternativ dazu folgen, wie in Fig. 3 dargestellt, auf eine Lage 32 zwei Lagen 31, die eine gegenläufige Anordnung der wellenartigen Strukturen aufweisen. Dabei ist im linken Teil der Fig. 3 ein Teil der Lagen nicht dargestellt, sodass der Verlauf einer Lage 31 besser ersichtlich ist. Die Lage 31 umfasst somit eine wellenartige Struktur, die beispielsweise durch Faltung einer Lage 32 vergrösserter Oberfläche erhältlich ist. Die dargestellte Wellenform ist nur ein mögliches Ausführungsbeispiel für eine derartige Lage 31, jede oberflächenvergrössernde Struktur kann geeignet sein, um zwei benachbarte Lagen 32 in einem bestimmten Abstand zu halten, solange sich zwischen den Lagen ein Zwischenraum 33 ausbildet, der von dem tröpfchenbeladenen Gas durchströmbar ist. Durch diese Massnahme wird der Gasstrom von den gitterartigen Strukturen einer Lage geteilt, vereinigt sich wieder in dem Zwischenraum 33, um sodann von der darauf folgenden Lage wieder geteilt zu werden. Durch die Stromteilungsfunktion der gitterartigen Strukturen und die Stromsammlerfunktion der Zwischenräume 33 werden Tropfen an die gitterartige Struktur geleitet, wo sie haften bleiben und entlang der gitterartigen Struktur in einen Sammelraum 16 rieseln.

Gemäss der Darstellung in Fig. 2 wurden drei Abscheideelemente 8 vom Typ der Fig. 3 übereinander gestapelt. Gas kann sowohl über die der inneren Mantelfläche 12 entsprechende Oberfläche in die Abscheideelemente eintreten, als auch mehr als ein Abscheideelement sequentiell durchlaufen. In Fig. 2 hat dementsprechend die Wandung 11, welche die Abscheideelemente umschliesst, entsprechend weniger Austrittsöffnungen für das Gas oder alternativ dazu kann auf die Austrittsöffnungen vollständig verzichtet werden. Das Gas tritt durch den mit Öffnungen 35 versehenen Deckenbereich 34 des zuoberst angeordneten Abscheideelements 8 aus. Der Gasstrom 59 erfolgt in diesem Ausführungsbeispiel somit im wesentlichen parallel zur Zentralachse 26 Für die Öffnungen 35 wurden in Fig. 2 verschiedene Anordnungen und Grössen gezeigt. Der über dem Strömungskanal liegende Zentralbereich des Deckenbereichs 34 enthält keine Öffnungen, sodass der gesamte Gasstrom über die Abscheideelemente 8 geleitet wird.

Anstatt der in Fig. 2 gezeichneten Stapelform von Abscheideelementen 8 können analog zu der Darstellung in Fig. 1 die zu einem Abscheideelement gehörigen Lagen von gitterartigen Strukturen durch eine im wesentlichen senkrecht zur Hauptströmungsrichtung angeordnete Platte 44 gehalten werden. Benachbarte Abscheideelemente sind durch derartige Platten 44 trennbar. Durch derartige Platten kann Flüssigkeit von jedem Abscheideelement separat abgezogen werden, sodass vermieden wird, dass bereits abgeschiedene Flüssigkeit wieder vom Gasstrom mitgerissen werden kann. Jede der Platten kann dabei als Sammelraum 16 ausgebildet sein. Sammelräume 16 von übereinander liegenden Platten 44 können durch Abflussrohre 17 miteinander verbunden sein. Jedes Abflussrohr 17 weist ein unteres Ende auf, das als Austrittsstutzen 45 ausgestaltet sein kann, durch welches die Flüssigkeit den Sammelraum 16 oder den Tropfenabscheider verlässt.

Der wirbelerzeugende Apparateteil 1 gemäss der Erfindung ist beispielsweise für einen Tropfenabscheider 10 gemäss Fig. 4 vorgesehen, der aus modulartig aufgebauten Abscheideelementen 8 zusammengesetzt sein kann. Der Gasstrom wird durch das stromaufwärts des ersten Abscheideelements 8 über den wirbelerzeugenden Apparateteil 1 geführt und tritt über schlitzartige Öffnungen 15 in das oder die Abscheideelemente 8 ein. Dort erfolgt eine Abscheidung,wobei es zu einer Verzögerung der Strömung stromabwärts nach den Öffnungen 15 kommt. Benachbarte Abscheideelemente 8 sind jeweils durch Platten 44 voneinander getrennt, wobei die unterste der Platten der Bodenplatte 18 der Fig. 1 entspricht. Die äussere Begrenzung eines Abscheideelements wird nicht wie in Fig. 2 durch eine Wandung 11, sondern durch eine zylindrische Struktur 46 gebildet, wie sie in Zusammenhang mit Fig. 1 bereits beschrieben wurde. Das Abscheideelement enthält gitterartige Strukturen, die - wie vorhin beschrieben - zylindrische Strukturen 46, sowie wellenförmige Strukturen 47 umfassen können. In Fig. 4 ist ein weiteres Ausführungsbeispiel für eine wellenförmige Struktur 47 gezeigt. Die Wellen dieser wellenförmigen Struktur weisen eine s-förmige Krümmung auf. In der Nähe des oberen und unteren Endes des Abscheideelements verlaufen die Wellen im wesentlichen in der Hauptströmungsrichtung 6, während sie im Zentralbereich des Abscheideelements unter einem Winkel zur Hauptströmungsrichtung geneigt sind. Benachbarte gitterartige Strukturen können dabei unterschiedliche Neigungswinkel aufweisen, insbesondere können die wellenartigen Strukturen eine kreuzkanalartige Struktur ausbilden. Benachbarte kreuzkanalartige Strukturen können voneinander durch eine zylindrische Struktur 46 getrennt sein, alternativ dazu ist es auch möglich, derartige s-förmige Strukturen direkt aufeinander folgen zu lassen. An diesen gitterartigen Strukturen bleiben Flüssigkeitstropfen hängen, koaleszieren und rinnen in Richtung der als Sammelraum 16 ausgebildeten Platte 44 oder Bodenplatte 18, die mit den zylindrischen oder wellenartigen Strukturen (46, 47) verbunden ist, ab. Die innere, das heisst, die den Strömungskanal 5 umgebende Begrenzung des Abscheideelements, wird durch die innere Mantelfläche 12 ausgebildet. Die innere Mantelfläche 12 enthält die oben bereits beschriebenen Öffnungen 15. In diesem Ausführungsbeispiel ist dargestellt, dass jedes Abscheideelement seine eigene innere Mantelfläche 12 aufweist. Das heisst, das Abscheideelement umfasst neben den gitterartigen Strukturen (46, 47), sowie einer Platte oder Bodenplatte (18,44) auch die innere Mantelfläche 12. In diesem Ausführungsbeispiel ist somit jedes Abscheideelement ein eigenes Modul, welches zu einem Stapel von Abscheideelementen kombiniert werden kann. Stromaufwärts des in Fig. 4 zuunterst gezeigten Abscheideelements 8 ist eine innere Mantelfläche 12 mit dem wirbelerzeugenden Apparateteil 1 angeordnet.

Die innere Mantelfläche 12 weist eine horizontale Eintrittsfläche 13 auf. Stromabwärts nach der Eintrittsfläche 13, d.h. in der Darstellung der Fig. 1 bis Fig. 4 oberhalb dieser Eintrittsfläche 13, folgen Leitflächen 2. Im Gasstrom, der die innere Mantelfläche 12 durchfliesst, wird um eine Zentralachse, die in Richtung der Hauptstströmungsrichtung 6 angeordnet ist, eine Rotationsströmung induziert, sodass Tröpfchen entlang der inneren Mantelfläche 12 in Form eines fliessenden Flüssigkeitsfilms abgeschieden werden. In der inneren Mantelfläche 12 sind Öffnungen, wie beispielsweise Schlitze 15, vorgesehen, durch welche die abgeschiedene Flüssigkeit in einen Sammelraum 16 zwischen Wandung 11 und der inneren Mantelfläche 12 fliesst. Aus dem Sammelraum 16 wird die Flüssigkeit durch ein Abflussrohr 17 in einen nicht dargestellten Flüssigkeitskollektor des Tropfenabscheiders weiter transportiert.

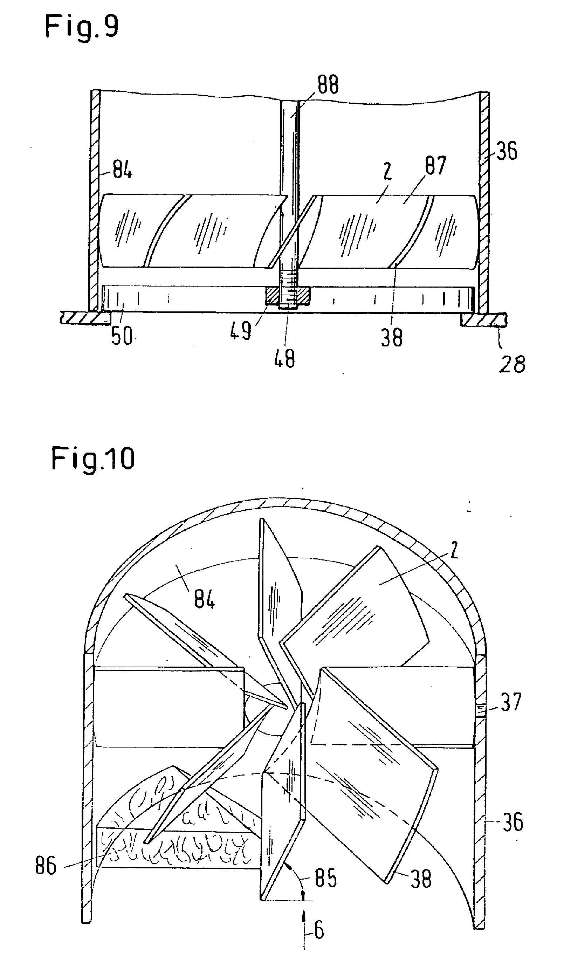

Stromaufwärts des wirbelerzeugenden Apparateteils kann eine Veränderung des Tropfenspektrums und/oder eine Vorabscheidung mittels eines Koaleszenzmittels erfolgen, welches beispielsweise als Matte 86 ausgeführt ist. In einer derartigen - in der Fig.10 beispielhaft dargestellten Matte 86 - lässt sich Flüssigkeit abfangen, indem die Tröpfchen auf benetzbaren Oberflächen abscheidbar sind, die beispielsweise als Geflecht von feinen Drähten oder Fasern ausgebildet sind. Eine solche Matte 86 wird beispielsweise unterhalb des Kolonnenbodens 28 oder in dem den wirbelerzeugenden Apparateteil enthaltenden Rohrabschnitt angeordnet. Sich ablösende Tropfen werden wieder mit dem Gasstrom mitgeführt, wobei der mittlere Tropfendurchmesser durch den kombinierten Effekt von Koaleszenz und Adhäsion gegenüber dem mittleren Tropfendurchmesser stromaufwärts der Matte erhöht ist. In der Matte 86 lässt sich folgender Effekt beobachten. An den gitterartigen Strukturen, aus welchen eine derartige Matte im wesentlichen aufgebaut ist, kommt es zur Abscheidung von kleinen Tröpfchen, die auf die benetzbare Oberfläche der Matte auftreffen und auf derselben durch Kohäsionskräfte gehalten werden. Durch die kontinuierliche Abscheidung kleiner Tröpfchen, vereinigen sich diese Tröpfchen auf der gitterartigen Struktur der Matte zu grösseren Tropfen. Derartige Tropfen werden wiederum vom Gasstrom erfasst und mitgerissen, wenn sie sich von der Oberfläche der gitterartigen Struktur ablösen. Da der Tropfendurchmesser immer noch zu gering ist, um bei der im Bereich des wirbelerzeugenden Apparateteils vorliegenden Gasgeschwindigkeit durch Schwerkraft entgegen der Hauptströmungsrichtung 6 abgeschieden zu werden, werden sie durch den Gasstrom in Richtung des Abscheideelements 8 transportiert.

Fig. 5 zeigt eine Strömungs-Leitstruktur des wirbelerzeugenden Apparateteils 1, mit den Leitflächen 2 und einem Umlenkkörper 3. Stromabwärts nach der Eintrittsfläche 13 und parallel zu dieser ist eine ringförmige Austrittsfläche 14 für die durch die Leitflächen 2 umgelenkte Gasströmung frei gelassen. Diese Austrittsfläche 14 liegt zwischen dem auf der Zentralachse angeordneten Umlenkkörper 3 und der inneren Wand 43 des Rohrstücks 36 oder der inneren Mantelfläche 12, wobei in der Folge die innere Wand 43 auch unter dem Begriff innere Mantelfläche umfasst sein soll. Der Umlenkkörper 3 ist kegelförmig und weist einen Kegelwinkel auf, der zu oberen Kanten 40 der Leitflächen 2 passt. In dem zentralen, von der Austrittsfläche 14 umschlossenen Bereich berührt der Umlenkkörper 3 die oberen Kanten 40 entlang Kontaktlinien 89. Aufgrund einer kombinierten Einwirkung durch den Umlenkkörper 3 und die Leitflächen 2 wird eine Rotationsströmung um die Zentralachse 26 induziert.

Anhand der Figuren 6 bis 8 wird die Strömungs-Leitstruktur näher erläutert. Fig. 6 zeigt ein vorbearbeitetes Blechstück mit in einer Ebene liegenden Leitflächen 2, das durch einen weiteren Arbeitsschritt in die Strömungs-Leitstruktur für den erfindungsgemässen Apparateteil 1 umformbar ist. Die Leitflächen 2 werden dazu jeweils um zwei Torsionspunkte 23 bzw. 24 (= Zentren der strichpunktiert gezeichneten Kreise 23', 24') aus der Ebene des Blechstücks gebogen. Um das Zentrum 20 (= Zentrum des Kreises 20') des Blechstücks, das im Tropfenabscheider auf die Zentralachse des Rohrstücks 36 oder der inneren Mantelfläche 12 zu liegen kommt, bilden die Leitflächen 2 zwischen einem inneren Kreis 22 und einem äusseren Kreis 21 einen Ring. Die äusseren Torsionspunkte 23 sind - ein erstes reguläres Polygon bildend - auf dem äusseren Kreis 21 angeordnet. Die inneren Torsionspunkte 24 - d.h. die zweite Hälfte der Torsionspunkte - bilden auf dem inneren Kreis 22 ein zweites reguläres Polygon. Unter einem regulären Polygon wird dabei ein Polygon verstanden, dessen Kantenlängen gleich sind. Die beiden Polygone sind bei der gezeigten Ausführungsform regelmässige Zwölfecke. Somit liegen 12 Leitflächen 2 vor. Bei der Ausführungsform der Fig. 2 sind es Achtecke. Möglich sind selbstverständlich auch Polygone, deren Anzahl Ecken 6, 10 oder eine andere natürliche Zahl zwischen beispielsweise 3 und 12 ist, wobei eine optimale Anzahl in einem mittleren Bereich dieses Intervalls liegt.

Die Leitflächen 2 sind aus dem ebenen Blechstück mittels spaltförmigen Durchbrüchen 4 erzeugt, durch die Kanten der Leitflächen 2 gebildet werden, nämlich radiale Kanten 40 sowie periphere Kanten 41 bzw. 42 auf den Kreisen 21 und 22. Die beiden genannten Polygone müssen nicht notwendigerweise so zu einander angeordnet sein, dass die Kanten 40 radial ausfallen: Die Kante 40 kann mit dem Radius r₂ des inneren Kreises 22, der das Zentrum 20 mit dem Torsionspunkt 24 der Kante 40 verbindet, einen Winkel einschliessen, der kleiner als 180° ist. Die Torsionspunkte 23, 24 haben jeweils einen umgebenden Raum, welcher die spaltförmigen Durchbrüche 4 benachbarter Leitflächen 2 trennt, indem in diesem umgebenden Raum radiale Materialbrücken auf den Kreisen 21 und 22 zwischen benachbarten Kanten 41 bzw. 42 ausgebildet werden. Die spaltförmigen Durchbrüche 4 lassen sich beispielsweise mittels eines Laserschneidverfahrens, durch Stanzen oder durch Drahterodieren herstellen, wobei beim Drahterodieren mehrere Bleche in einem Stapel angeordnet gleichzeitig bearbeitbar sind.

Der Radius r₂ des inneren Kreises 22 kann - anders als in Fig. 6 dargestelltwesentlich kleiner als der Radius r₁ des äusseren Kreises 21 gewählt sein, so dass sich die Flächen der beiden Kreise um mindestens das Hundertfache unterscheiden. Dies ist vorteilhaft hinsichtlich einer Behandlungskapazität des Tropfenabscheiders, da sich so mit der Eintrittsfläche 13 weitgehend die ganze zur Verfügung stehende Querschnittsfläche der inneren Mantelfläche 12 für die Behandlung des Gasstroms nutzen lässt. Aus Festigkeitsgründen kann die in Fig. 6 gezeigte Ausführungsform vorteilhafter sein, wobei das Verhältnis der Radien r₁: r₂ bevorzugt zwischen 2 und 4 liegt.

Fig. 7 zeigt das Blechstück der Fig. 6, bei dem zwei benachbarte Leitflächen 2 um die Torsionspunkte 23 und 24 aus der Ebene des Blechstücks gebogen sind. (Die peripheren Kanten 41 und 42 sind der Einfachheit halber als gerade Verbindungen der Eckpunkte 23, 23a bzw. 24, 24a gezeichnet.) Alle Leitflächen 2 schliessen nach der Umformung mit der Eintrittsfläche 13 einen Neigungswinkel ein, der grösser als 25° und kleiner als 65° ist. Der Neigungswinkel wird so gewählt, dass eine Leitstruktur entsteht, die hinsichtlich einer Drallerzeugung im Gasstrom und einem Druckabfall zwischen der Eintrittsöffnung 13 und der Austrittsöffnung 14 optimal ist. Hinsichtlich einer solchen Optimierung kann es vorteilhaft sein, wenn die Leitflächen 2 gekrümmt ausgebildet werden. Zum gleichen Zweck kann die Leitfläche 2 auch so gestaltet werden, dass sie mindestens zwei ebene Teilflächen aufweist, die gegeneinander geneigt sind, Dabei kann ein Biegen um Kanten durch zusätzliche spaltförmige Durchbrüche erleichtert werden, die partiell auf den Biegekanten hergestellt werden.

Fig. 8 zeigt das umgeformte Blechstück der Fig. 7 mit dem kegelförmigen Umlenkkörper 3. Die Gasströmung, welche die Leitstruktur zwischen der Eintrittsfläche 13 und der Austrittsfläche 14 durchfliesst, ist durch Pfeile 5 angedeutet. Die strichpunktiert gezeichnete Linie 12' gibt den äusseren Rand der inneren Mantelfläche 12 an deren Eintrittsende an. Der Umlenkkörper 3, der kegel- oder plattenförmig sein kann, bestimmt die Grösse der Austrittsfläche 14. Diese soll um mindestens 20 % kleiner als die Eintrittsfläche 13 sein, wobei sie vorzugsweise um 30 - 40 % kleiner ist. Vorteilhaft ist es, wenn der Durchmesser des Umlenkkörpers 3 ungefähr gleich gross wie der Radius r₁ des äusseren Kreises 21 oder etwas grösser ist.

Der erfindungsgemässe Tropfenabscheider wird mit Vorteil zusammen mit weiteren Teilapparaten verwendet. So kann zum Zweck einer Tropfenkoaleszenz im Gasstrom stromaufwärts vor den wirbelerzeugenden Apparateteilen 1 mindestens eine Matte 86 vorgelagert werden, in der Flüssigkeit in Form feiner Tröpfchen auf benetzbaren Oberflächen abscheidbar ist. Aufgrund von Scherkräften, welche die Gasströmung in der Matte 86 erzeugen, wird die Flüssigkeit in Tropfen mit einem grösseren mittleren Tropfenquerschnitt wieder in den Gasstrom frei gesetzt und mit diesem entgegen der Schwerkraft mitgeführt. (Dabei ist vorausgesetzt, dass die Geschwindigkeit des Gasstrom ausreichend gross ist.) Die grösseren Tropfen lassen sich im Tropfenabscheider mit einem höheren Wirkungsgrad als die feineren Tröpfchen abscheiden. Wie oben bereits beschrieben, können gleiche oder ähnliche tropfenabscheidende Matten 86 für die Gasströme die aus dem oder den Tropfenabscheidern austreten, integriert werden. Ein Ausschnitt aus einer derartigen Matte 86 ist in Fig. 10 dargestellt.

Stromaufwärts der beschriebenen Anordnung, welche zumindest einen erfindungsgemässen Tropfenabscheider enthält, wird der Gasstrom mit einem Verteiler weitgehend gleichmässig über eine vom Tropfenabscheider abgedeckte Querschnittsfläche - beispielsweise die Querschnittsfläche einer Kolonne - verteilt. Mit Vorteil wird ein erster Teil der vom Gasstrom mitgeführten Flüssigkeit bereits in einem solchen Verteiler abgeschieden. Eine derartige Anordnung ist in der EP-A- 0 195 464 offenbart.

Der Durchmesser des äusseren Kreises 21 (= 2r₁) hat einen Wert zwischen 50 und 300 mm, vorzugsweise zwischen 150 und 250 mm. Die Höhe der inneren Mantelfläche 12 ist um einen Faktor 2.7 - 3.7 (vorzugsweise 3.1 - 3.4) grösser als 2r₁.

Fig. 9 zeigt eine nicht von den Ansprüchen umfasste Strömungs-Leitstruktur im Aufriss. Der wirbelerzeugende Apparateteil 1 gemäss Fig. 9 ist in einem Fig. 9 ist in einem Rohrstück 36 angeordnet, der stromaufwärts eines nicht dargestellten Tropfenabscheiders gemäss eines der vorhergehenden Ausführungsbeispiele angeordnet ist. In der Darstellung ist der vordere Teil des Rohrstücks 36 nicht gezeigt, sodass die Leitflächen 2 sichtbar werden. Die Leitflächen scheinen in dieser Darstellung daher frei in der Luft zu schweben. Die Leitflächen sind allerdings an der Innenwand 84 des Rohrstücks 36 angebracht, und zwar entweder unlösbar durch eine Schweissverbindung oder lösbar durch eine Steckverbindung. Hierzu ist beispielsweise ein schlitzartiger Durchbruch 37 in der Wand des Rohrstücks 36 vorgesehen, in welchem ein Ende 38 der Leitfläche 2 aufgenommen wird. Jede Leitfläche ist als plattenförmiges Element 87 ausgestaltet, das in einem Winkel zur Hauptströmungsrichtung 6 angeordnet ist. Der Winkel 85 zwischen der Leitfläche und einer normal zur Hauptströmungsrichtung 6 liegenden Ebene liegt zwischen 20° und 70°, insbesondere zwischen 45° und 65°, besonders bevorzugt bei 60°. Bei diesem Winkel 85 ist eine optimale Verteilung der Strömung über die innere Mantelfläche aller Abscheideelemente möglich, wobei der Druckverlust gering gehalten werden kann. In der Fig. 9 ist des weiteren eine entlang der Zentralachse 26 angeordnete Stange 88 angeordnet, mittels welcher gemäss Fig. 1 oder 4 ein Abdeckelement 25 auf dem zuoberst angeordneten Abscheideelement 8 des Tropfenabscheiders 10 positioniert wird. Hierdurch werden die einzelnen Abscheideelemente eines mehrstufigen Tropfenabscheiders zusammengehalten. Des weiteren können auf der Stange 88 nach Fig. 1 Leitflächen eines wirbelerzeugenden Apparateteils angeordnet werden, und/oder weitere strömungsleitende Elemente, wie beispielsweise ein Umlenkelement 7, welches in Fig. 1 oder Fig. 4 dargestellt ist, oder weitere, die Strömung leitende Elemente, welche beispielsweise schraubenförmige Leitflächen umfassen. Hierzu ist die Stange 88 gemäss Fig. 9 an ihrem unteren Ende 48 mit einem Gewinde versehen, welches in einer Mutter 49 aufgenommen ist, die mit einem Stützelement 50 unlösbar verbunden ist. Das Stützelement 50 ist vorzugsweise als plattenförmiges Element ausgestaltet, die derart im Rohrstück 36 angeordnet ist, dass sie selbst einen möglichst geringen Strömungswiderstand aufweist. Das Stützelement 50 liegt in dieser Ausführungsform auf dem Kolonnenboden 28 auf.

In Fig. 10 ist die Strömungs-Leitstruktur der Fig. 9 in einer anderen Ansicht dargestellt. Die Stange 88 ist in diesem Beispiel weggelassen worden. In der vorliegenden Darstellung sind 8 Leitflächen in gleichen Abständen zueinander angeordnet. Werden die Leitflächen von unten in Richtung der Hauptströmungsrichtung 6 angeströmt, erfolgt an den Leitflächen eine Strömungsumlenkung. Die Enden der Leitflächen 38 sind wie unter Fig. 9 beschrieben wurde, durch eine lösbare oder unlösbare Verbindung mit dem Rohrstück 36 verbunden. Auf der rechten Seite der Fig. 10 ist ein Ausschnitt aus einem schlitzartigen Durchbruch 37 gezeigt.

Fig. 11 zeigt eine Darstellung des Verhältnisses von Gasgeschwindigkeit/mittlerer Gasgeschwindigkeit in Abhängigkeit von der Höhe des Tropfenabscheiders 10. Durch den Einsatz eines wirbelerzeugenden Apparateteils wird die Gas- und Flüssigkeitsmenge zur Eintittsfläche eines Abscheideelements derart gesteuert, dass weniger Flüssigkeit zum oberen Bereich des vertikal installierten Abscheideelements getragen wird, während die Gasmenge über die Eintrittsfläche des Abscheideelements weitgehend harmonisiert und geglättet wird.

Im Abscheideelement trifft die Flüssigkeit in Form von Tröpfchen auf gitterartigen Strukturen auf, wodurch Tröpfchen entsprechend deren Trägheit abgeschieden werden. Durch Adhäsion bilden benachbarte Tröpfen grössere Tropfen, welche sich wiederum zu einem Flüssigkeitsfilm oder Rinnsal vereinen können. Die abgeschiedene Flüssigkeit muss entsprechend der Gravitation durch das Abscheideelement nach unten abfliessen, während das Gas weiter der vorgegebenen Richtung durch das Abscheideelement strömt. Die abgeschiedene Flüssigkeit verursacht einen Widerstand (Flüssigkeits-Hold-up) im Abscheideelement, wodurch die Gasgeschwindigkeit reduziert werden muss, um keinen Tropfenaustrag aus der bereits abgeschiedenen Flüssigkeit zu erzeugen.

Durch die Zentrifugalkraft erhalten die Tröpfchen eine radial gerichtete Geschwindigkeitskomponente, sodass sie entsprechend der Richtung des Geschwindigkeitsvektors ähnlich wie in einer Zentrifuge nach aussen getragen werden. Die grösseren Tröpfchen werden bereits kurz nach dem wirbelerzeugenden Apparateteil an der äusseren Begrenzung als Flüssigkeit koaleszieren und weniger Flüssigkeit wird zu den oberen Bereichen des Abscheideelements 8 geführt, weshalb der Flüssigkeits-Hold-up in diesen Abscheideelementen geringer ist. Durch den radialen Geschwindigkeitsvektor der Tröpfchen wird ein Teil dieser Tröpfchen bereits nach dem wirbelerzeugenden Apparateteil abgeschieden und wird über die als Sammelraum ausgebildete Bodenplatte ausgetragen. Durch den Einsatz eines wirbelerzeugenden Apparateteils 1 kann als Folge die Bauhöhe des Abscheideelements oder des Stapels von Abscheideelementen verringert werden.

Auf der x-Achse des Graphen ist dabei das Verhältnis von Gasgeschwindigkeit/mittlerer Gasgeschwindigkeit angegeben, wobei die Gasgeschwindigkeit maximal ungefähr doppelt so hoch wie die mittlere Gasgeschwindigkeit liegen kann. Auf der γ-Achse ist die Höhe eines Stapels von Abscheideelementen angegeben. Wenn das Rohrstück 36 beispielsweise 200 mm Durchmesser aufweist, ist eine Höhe des Stapels in einem Bereich 0,4 bis 1 m optimal. Für ein derartiges Modellsystem wurde das Verhältnis von Gasgeschwindigkeit zu mittlerer Gasgeschwindigkeit für einen Tropfenabscheider ohne wirbelerzeugenden Apparateteil gemäss Kurve 51 ermittelt. Dieser Kurvenverauf macht deutlich, dass die unteren Bereiche des Tropfenabscheiders nur schwach durchströmt werden und stellen eine Lösung nach dem Stand der Technik dar. Mittels der in Fig. 1 dargestellten Umlenkelemente 7 ist es bereits möglich, einen höheren Anteil an Gasströmung in die unteren Bereiche des Tropfenabscheiders zu lenken. Die Wirkung derartiger Umlenkelemente ist in Kurve 52 dargestellt, sodass in den unteren Bereichen des Tropfenabscheiders schon ein wesentlicher Anteil der Flüssigkeit abgeschieden wird. Kurven 53, 54, 55, 56 betreffen Ausführungsbeispiele, in welchen ein wirbelerzeugender Apparateteil mit Leitflächen gemäss des in Fig. 9 und 10 dargestellten Ausführungsbeispiels stromaufwärts des Tropfenabscheiders eingebaut ist. Zur Ermittlung der Kurve 53 wurde für die Leitflächen ein Winkel von 60° zur Hauptströmungsrichtung, zur Ermittlung der Kurve 54 wurde ein Winkel von 50°, zur Ermittlung der Kurve 55, ein Winkel von 40° und zur Ermittlung der Kurve 56 ein Winkel von 20° gewählt.

Fig. 12 zeigt eine Darstellung des Verhältnisses von Flüssigkeitsbeladung/mittlerer Flüssigkeitsbeladung in Abhängigkeit von der Höhe des Tropfenabscheiders 10. Auf der x-Achse des Graphen ist dabei das Verhältnis von Flüssigkeitsbeladung/mittlerer Flüssigkeitsbeladung angegeben, wobei die Flüssigkeitsbeladung maximal ungefähr fünf mal so hoch wie die mittlere Flüssigkeitsbeladung liegen kann. Auf der y-Achse ist die Höhe des Stapels angegeben. Wenn das Rohrstück 36 beispielsweise 200 mm Durchmesser aufweist, ist eine Höhe des Stapels in einem Bereich 0,4 bis 1 m optimal. Für ein derartiges Modellsystem wurde das Verhältnis von Flüssigkeitsbeladung zu mittlerer Flüssigkeitsbeladung für einen Tropfenabscheider ohne wirbelerzeugenden Apparateteil gemäss Kurve 61 ermittelt. Dieser Kurvenverlauf macht deutlich, dass die unteren Bereiche des Tropfenabscheiders nur eine geringe Flüssigkeitsbeladung aufweisen und stellen eine Lösung nach dem Stand der Technik dar. Mittels der in Fig. 1 dargestellten Umlenkelemente 7 ist es bereits möglich, einen höheren Anteil an Flüssigkeitsbeladung in den unteren und mittleren Bereichen des Tropfenabscheiders abzuscheiden. Diese Verbesserung ist aus Kurve 62 im Vergleich mit Kurve 61 ersichtlich. Trotz allem fällt nach wie vor ein grosser Teil der Flüssigkeitsbeladung im oberen Teil des Stapels an. Kurven 63, 64, 65, 66 betreffen Ausführungsbeispiele, in welchen ein wirbelerzeugender Apparateteil mit Leitflächen gemäss des in Fig. 9 und 10 dargestellten Ausführungsbeispiels stromaufwärts des Tropfenabscheiders eingebaut ist. Zur Ermittlung der Kurve 63 wurde für die Leitflächen ein Winkel von 60° zur Hauptströmungsrichtung, zur Ermittlung der Kurve 64 wurde ein Winkel von 50°, zur Ermittlung der Kurve 65, ein Winkel von 40° und zur Ermittlung der Kurve 66 ein Winkel von 20° gewählt. Somit wird der Ausnützungsgrad des Tropfenabscheiders weiter verbessert. Hierdurch wird es möglich, die Gesamtbauhöhe des Tropfenabscheiders zu verringern, was bei Platzmangel in Trennkolonnen einen wesentlichen Vorteil darstellt.

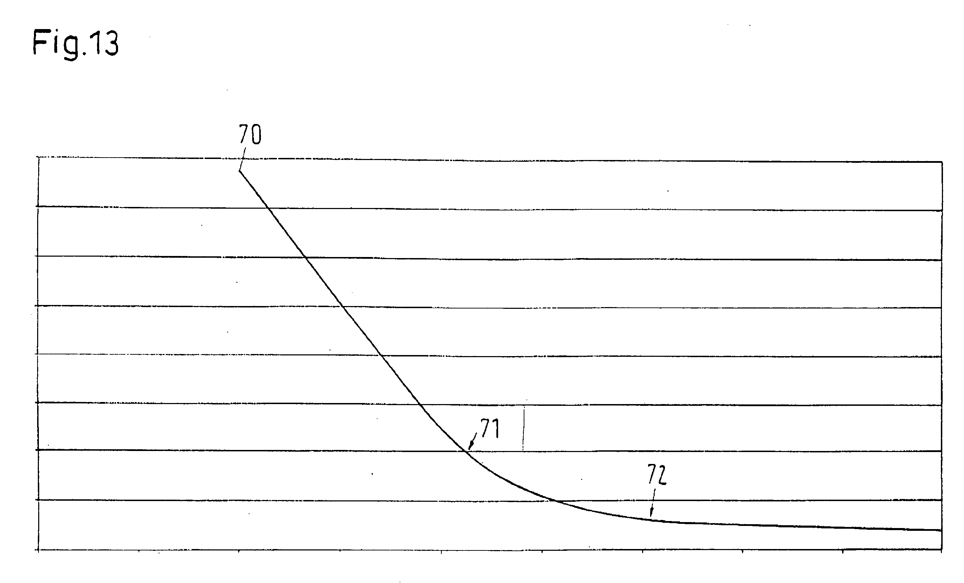

Fig. 13 zeigt eine Darstellung des Druckverlustwiderstandsbeiwerts gemäss des Ausführungsbeispiels in Fig. 9 und Fig. 10 in Abhängigkeit vom Anstellwinkel der Leitflächen des wirbelerzeugenden Apparateteils. Auf der x-Achse ist der Anstellwinkel eingetragen, der theoretisch zwischen 0 und 90° liegen kann. Im Bereich von 0° bis 20° sind die Leitflächen so flach, dass der Druckverlustwiderstandsbeiwert in jedem Fall oberhalb eines technisch sinnvollen Bereichs liegt. Erst ab einem Winkel von ca. 20°, welcher dem linken Ende 70 der Kurve entspricht, liegt der Druckverlustwiderstandsbeiwert in einem Bereich, der einen kontinuierlichen Betrieb eines Tropfenabscheiders in einer Trennkolonne erlaubt. Bis ca. 40° sinkt der Druckverlustwiderstandsbeiwert annähernd linear (71), ab ca. 60° (72) kommt es kaum noch zu einer Abnahme des Druckverlustwiderstandsbeiwerts. Die Leitflächen 2 schliessen mit der Eintrittsfläche 13 einen Neigungswinkel ein, der grösser als 20° und kleiner als 70° ist, vorzugsweise zwischen 45° und 65° liegt. Der optimale Wert für den Neigungswinkel liegt bei 60°, wie sich in Zusammenhang mit dem Ergebnissen der Fig. 12 (Kurve 63) ergibt. Bei fast minimalem Druckverlust erhält man den gewünschten hohen Abscheidegrad bereits in dem Bereich des Tropfenabscheiders, der unmittelbar stromabwärts des wirbelerzeugenden Apparates liegt.

## Patentansprüche

1. Tropfenabscheider (10) umfassend einen Strömungskanal (5), durch welchen ein tröpfchenbeladenes Gas hindurch leitbar ist und entlang einer Hauptströmungsrichtung (6) von diesem tröpfchenbeladenen Gas durchströmbar ist, wobei ein Abscheideelement (8), das im wesentlichen ringförmig um den Strömungskanal (5) angeordnet ist und eine innere Mantelfläche (12) hat, die im wesentlichen den Durchmesser des Strömungskanals (5) aufweist, und Öffnungen (15,19) für den Eintritt des tröpfchenbeladenen Gases in das Abscheideelement (8) umfasst, wobei sich das Abscheideelement (8) zumindest über einen Teil der Länge des Strömungskanals (5) erstreckt und eine Mehrzahl von gitterartigen Strukturen (9) umfasst, **dadurch gekennzeichnet, dass**
ein wirbelerzeugender Apparateteil (1) mit Leitflächen (2) im Strömungskanal (5) angeordnet ist, mittels welchem das tröpfchenbeladene Gas in eine Rotationsbewegung gebracht und Tröpfchen durch Zentrifugalkraft in Richtung des Abscheideelements (8) leitbar sind und mittels den Leitflächen (2) zumindest ein Teil des tröpfchenbeladenen Gases von der Hauptströmungsrichtung (6) in Richtung der Öffnungen (15,19) umlenkbar ist
wobei die Leitflächen (2) des wirbelerzeugenden Apparateteils (1) innerhalb eines Rohrstücks (36) stromaufwärts der inneren Mantelfläche (12) um eine in Hauptströmungsrichtung (6) ausgerichtete Zentralachse (26) angeordnet sind,
wobei die Leitflächen (2) eine Eintrittsfläche (13) ausbilden,
wobei stromabwärts zur Eintrittsfläche (13) für den durch die Leitflächen (2) umgelenkten Gasstrom eine ringförmige Austrittsfläche (14) vorgesehen ist
wobei die Leitflächen (2) aus genau einem ebenen Blech mittels spaltförmigen Durchbrüchen (4) erzeugt sind.

2. Tropfenabscheider nach Anspruch 1, wobei das Abscheideelement (8) von dem tröpfchenbeladenen Gas von der inneren Mantelfläche (12) in Richtung einer äusseren Wandung (11) in einer Strömungsrichtung, die einen Winkel von > 0° und < 180° zur Hauptströmungsrichtung (6) einschliesst, durchströmbar ist.

3. Tropfenabscheider nach Anspruch 1 oder 2, wobei das Abscheideelement (8) Abschnitte umfasst und/oder aus mehreren in Hauptströmungsrichtung (6) hintereinander geschalteten Abscheideelementen (8) zusammengesetzt ist, wobei zumindest ein Teil des umgelenkten Gases durch einen zum wirbelerzeugenden Apparateteil (1) benachbart liegenden Abschnitt eines Abscheideelements und/oder benachbart liegenden Abscheidelement (8) einleitbar ist, wobei ein weiterer Teil des umgelenkten Gases durch einem vom wirbelerzeugenden Apparateteil (1) entfernten Abschnitt und/oder entfernten Abscheideelement (8) leitbar ist.

4. Tropfenabscheider nach einem der vorhergehenden Ansprüche, wobei die gitterartigen Strukturen (9) zwischen der inneren Mantelfläche (12) und der äusseren Wandung (11) im wesentlichen in Ringflächen angeordnet sind, die zur inneren Mantelfläche (12) und/oder der äusseren Wandung (11) parallel verlaufen.

5. Tropfenabscheider nach einem der vorhergehenden Ansprüche 1-3, wobei die gitterartigen Strukturen zwischen der inneren Mantelfläche (12) und der äusseren Wandung (11) in einem Winkel zur inneren Mantelfläche (12) und/oder der äusseren Wandung (11) angeordnet sind, wobei der Winkel vorzugsweise zwischen 30° und 70°, insbesondere zwischen 45° und 60° liegt.

6. Tropfenabscheider nach einem der vorhergehenden Ansprüche, wobei jede der zu einem Abscheideelement (8) gehörigen gitterartigen Strukturen (9) durch eine im wesentlichen senkrecht zur Hauptströmungsrichtung (6) angeordnete Bodenplatte (18) gehalten wird.

7. Tropfenabscheider nach Anspruch 6, wobei benachbarte Abscheideelemente (8) durch die Bodenplatten (18) voneinander trennbar sind, wobei auf jeder Bodenplatte (18) Sammelmittel (16, 17,45) für die in den gitterartigen Strukturen abgeschiedene Flüssigkeit vorgesehen sind.

8. Tropfenabscheider nach einem der vorhergehenden Ansprüche, wobei im Gasstrom stromaufwärts vor dem wirbelerzeugenden Apparateteil (1) mindestens eine Matte (86) zur Tropfenkoaleszenz vorgelagert ist.

9. Tropfenabscheider nach Anspruch 1, wobei alle Leitflächen (2) mit der Eintrittsfläche (13) einen Neigungswinkel (83) einschliessen, der grösser als 20° und kleiner als 70° ist, vorzugsweise zwischen 45° und 65° liegt.

10. Tropfenabscheider nach Ansprüchen 1 oder 9, wobei der Neigungswinkel (83) entlang der Kante (82) von dem Rohrstück zur Zentralachse (26) veränderlich ist.

11. Tropfenabscheider nach einem der Ansprüche 1, 9 oder 10, wobei ein Umlenkkörper (3) auf der Zentralachse (26) angeordnet ist.

12. Tropfenabscheider nach einem der Ansprüche 1, 9 bis 11, wobei die Leitflächen zwischen einem inneren Kreis (22) sowie einem äusseren Kreis (21) um die Zentralachse angeordnet sind, die Austrittsfläche (14) kleiner als die Ringfläche zwischen den beiden Kreisen ist, so dass im Gasstrom aufgrund einer kombinierten Einwirkung durch den Umlenkkörper (3) und die Leitflächen (2) eine Rotationsströmung um die Zentralachse (26) induzierbar ist.

13. Tropfenabscheider nach Anspruch 12, wobei die Leitflächen (2) jeweils um zwei Torsionspunkte (23, 24) stromabwärts aus einer Ebene gebogen sind, wobei auf dem äusseren Kreis (21) die eine Hälfte der Torsionspunkte (23) auf einem ersten regulären Polygon, die andere Hälfte der Torsionspunkte (24) auf dem inneren Kreis (22) auf einem zweiten regulären Polygon angeordnet sind.

14. Tropfenabscheider nach Anspruch 1, wobei die spaltförmigen Durchbrüche (4) mittels eines Laserschneidverfahrens, durch Drahterodieren oder durch Stanzen hergestellt sind.

15. Tropfenabscheider nach einem der Ansprüche 1, 9 bis 14, wobei jede Leitfläche (2) gekrümmt ist oder mindestens zwei ebene Teilflächen aufweist, die gegeneinander geneigt sind.

16. Tropfenabscheider nach einem der Ansprüche 11 bis 15, wobei der Umlenkkörper (3) kegelförmig ist und einen Kegelwinkel aufweist, der zu den oberen Kanten (40) der Leitflächen (2) passt, die durch radiale Abschnitte der spaltförmigen Durchbrüche (4) erzeugt sind, so dass sich in dem zentralen, von der Austrittsfläche umschlossenen Bereich jeweils eine Kontaktlinie (89) zwischen dem Umlenkkörper (3) und den Kanten ergibt.

## Claims

1. A droplet separator (10) including a flow passage (5) through which a droplet-carrying gas can be directed and through which this droplet-carrying gas can flow along a main flow direction (6), with a separator element (8), which is arranged substantially in ring shape around the flow passage (5), and which has an inner jacket surface (12) having substantially the diameter of the flow passage (5) and which includes openings (15, 19) for the entry of the droplet-carrying gas into the separator element (8), with the separator element (8) extending at least over a part of the length of the flow passage (5) and including a plurality of grid-like structures (9), **characterised in that** a vortex generation apparatus part (1) having guide surfaces (2) is arranged in the flow passage (5) by means of which the droplet-carrying gas is set into a rotary movement and droplets can be directed by centrifugal force in the direction of the separator element (8) and at least some of the droplet-carrying gas can be deflected by means of the guide surfaces (2) from the main flow direction (6) in the direction of the openings (15, 19),
wherein the guide surfaces (2) of the vortex generating apparatus part (1) are arranged within a tube piece (36) upstream of the inner jacket surface (12) around a central axis (26) oriented in the main flow direction (6), with the guide surfaces (2) forming an inlet surface (13), with a ring-shaped outlet surface (14) being provided downstream with respect to the inlet surface (13) for the gas flow deflected by the guide surfaces (2),
wherein the guide surfaces (2) are produced from precisely one planar metal sheet by means of gap-shaped openings (4).

2. A droplet separator in accordance with claim 1, wherein the separator element (8) can be flowed through by the droplet-carrying gas from the inner jacket surface (12) in the direction of an outer wall (11) in a flow direction which includes an angle of > 0° and < 180° to the main flow direction (6).

3. A droplet separator in accordance with claim 1 or claim 2, wherein the separator element (8) includes sections and/or is composed of a plurality of separator elements (8) connected sequentially in the main flow direction (6), with at least some of the deflected gas being able to be introduced through a section of a separator element lying adjacent to the vortex generating apparatus part (1) and/or by a separator element (8) disposed adjacently, with some further deflected gas being able to be directed by a section remote from the vortex generating apparatus part (1) and/or by a remote separator element (8).

4. A droplet separator in accordance with any one of the preceding claims, wherein the grid-like structures (9) are arranged between the inner jacket surface (12) and the outer wall (11) substantially in ring surfaces which extend parallel to the inner jacket surface (12) and / or to the outer wall (11).

5. A droplet separator in accordance with any one of the preceding claims 1-3, wherein the grid-like structures are arranged between the inner jacket surface (12) and the outer wall (11) at an angle to the inner jacket surface (12) and/or the outer wall (11), wherein the angle preferably lies between 30° and 70°, in particular between 45° and 60°.

6. A droplet separator in accordance with any one of the preceding claims, wherein each of the grid-like structures (9) belonging to a separator element (8) is held by a base plate (18) arranged substantially perpendicular to the main flow direction (6).

7. A droplet separator in accordance with claim 6, wherein adjacent separator elements (8) can be separated from one another by the base plates (18), with collection means (16, 17, 45) for the liquid separated in the grid-like structures being provided on each base plate (18).

8. A droplet separator in accordance with any one of the preceding claims, wherein at least one mat (86) for the droplet coalescence is arranged upstream in the gas flow before the vortex generating apparatus part (1).

9. A droplet separator in accordance with claim 1, wherein all the guide surfaces (2) include an angle of inclination (83) with the inlet surface (13) which is larger than 20° and smaller than 70° and preferably lies between 45° and 65°.

10. A droplet separator in accordance with claim 1 or claim 9, wherein the angle of inclination (83) is variable along the edge (82) from the tube piece to the central axis (26).

11. A droplet separator in accordance with any one of the claims 1, 9 or 10, wherein a deflection body (3) is arranged on the central axis (26).

12. A droplet separator in accordance with any one of the claims 1, 9 to 11, wherein the guide surfaces (2) are arranged between an inner circle (22) and an outer circle (21) around the central axis, with the outlet surface (14) being smaller than the ring surface between the two circles so that a rotational flow can be induced in the gas flow around the central axis (26) due to a combined effect through the deflection body (3) and the guide surfaces (2).

13. A droplet separator in accordance with claim 12, wherein the guide surfaces (2) are each bent out of a plane downstream around two torsion points (23, 24), wherein the one half of the torsion points (23) are arranged on the outer circle (21) on a first regular polygon and the other half of the torsion points (24) are arranged on the inner circle (22) on a second regular polygon.

14. A droplet separator in accordance with claim 13, wherein the gap-shaped openings (4) are established by means of a laser cutting process, by wire erosion or by stamping.

15. A droplet separator in accordance with any one of the claims 1, 9 to 14, wherein each guide surface (2) is curved or has at least two planar part surfaces which are inclined with respect to one another.

16. A droplet separator in accordance with any one of the claims 11 to 15, wherein the deflection body (3) is conical and has a cone angle which matches the upper edges (40) of the guide surfaces (2) which are produced by radial sections of the gap-shaped openings (4) so that a respective contact line (89) results between the deflection body (3) and the edges in the central region surrounded by the outlet surface.

## Revendications

1. Pare-goutte (10) comprenant un canal d'écoulement (5) à travers lequel un gaz chargé de gouttelettes peut être conduit et le long d'une direction de circulation principale (6) duquel le gaz chargé de gouttelettes peut circuler, comprenant un élément de séparation (8) qui est agencé de façon sensiblement annulaire autour du canal d'écoulement (5) et comporte une surface de garniture intérieure (12) qui présente sensiblement le diamètre du canal d'écoulement (5) et qui comprend des ouvertures (15, 19) pour l'entrée du gaz chargé de gouttelettes dans l'élément de séparation (8), dans lequel l'élément de séparation (8) s'étend au moins sur une partie de la longueur du canal d'écoulement (5) et comprend une pluralité de structures en forme de grilles (9), **caractérisé**
**en ce qu'**une partie d'appareil produisant un tourbillon (1) comprenant des surfaces conductrices (2) est agencée dans le canal d'écoulement (5), au moyen de laquelle partie le gaz chargé de gouttelettes est entraîné dans un mouvement de rotation et les gouttelettes peuvent être entraînées dans la direction de l'élément de séparation (8) par la force centrifuge, et au moyen des surfaces conductrices (2), au moins une partie du gaz chargé de gouttelettes peut être déviée depuis la direction de circulation principale (6) dans la direction des ouvertures (15, 19),
étant entendu que les surfaces conductrices (2) de la partie d'appareil produisant un tourbillon (1) sont agencées à l'intérieur d'une pièce tubulaire (36) en amont de la surface de garniture intérieure (12) autour d'un axe central (26) orienté dans la direction de circulation principale (6),
étant entendu que les surfaces conductrices (2) forment une surface d'entrée (13),
étant entendu qu'une surface de sortie annulaire (14) est prévue en aval de la surface d'entrée (13) pour le flux de gaz dévié par les surfaces conductrices (2),
étant entendu que les surfaces conductrices (2) sont fabriquées à partir de précisément une tôle plate au moyen de perçages en forme de fentes (4).

2. Pare-goutte selon la revendication 1, dans lequel l'élément de séparation (8) peut être traversé par le gaz chargé de gouttelettes depuis la surface de garniture intérieure (12) dans la direction d'une paroi extérieure (11) dans une direction de circulation qui présente un angle de > 0° et < 180° par rapport à la direction de circulation principale (6).

3. Pare-goutte selon la revendication 1 ou 2, dans lequel l'élément de séparation (8) comprend des sections et/ou se compose de plusieurs éléments de séparation (8) montés les uns derrière les autres dans la direction de circulation principale (6), dans lequel au moins une partie du gaz dévié peut être introduite à travers une section d'un élément de séparation située en position adjacente à la partie d'appareil produisant un tourbillon (1) et/ou un élément de séparation (8) situé en position adjacente, et dans lequel une autre partie du gaz dévié peut être conduite à travers une section distante de la partie d'appareil produisant un tourbillon (1) et/ou un élément de séparation (8) distant.

4. Pare-goutte selon l'une des revendications précédentes, dans lequel les structures en forme de grilles (9) entre la surface de garniture intérieure (12) et la paroi extérieure (11) sont agencées sensiblement dans des surfaces annulaires qui s'étendent parallèlement à la surface de garniture intérieure (12) et/ou à la paroi extérieure (11).

5. Pare-goutte selon l'une des revendications 1 à 3 précédentes, dans lequel les structures en forme de grilles entre la surface de garniture intérieure (12) et la paroi extérieure (11) sont agencées dans un angle par rapport à la surface de garniture intérieure (12) et/ou à la paroi extérieure (11), cet angle étant de préférence compris entre 30° et 70°, en particulier entre 45° et 60°.

6. Pare-goutte selon l'une des revendications précédentes, dans lequel chacune des structures en forme de grilles (9) correspondant à un élément de séparation (8) est maintenue par une plaque de fond (18) agencée sensiblement perpendiculairement par rapport à la direction de circulation principale (6).

7. Pare-goutte selon la revendication 6, dans lequel des éléments de séparation (8) adjacents peuvent être séparés les uns des autres par les plaques de fond (18), étant entendu que des moyens de collecte (16, 17, 45) sont prévus sur chaque plaque de fond (18) pour le liquide séparé dans les structures en forme de grilles.

8. Pare-goutte selon l'une des revendications précédentes, dans lequel au moins un matelas (86) destiné à la coalescence des gouttes est monté antérieurement dans le flux de gaz en amont de la partie d'appareil produisant un tourbillon (1).

9. Pare-goutte selon la revendication 1, dans lequel toutes les surfaces conductrices (2) présentent un angle d'inclinaison (83) qui est supérieur à 20° et inférieur à 70°, qui est de préférence compris entre 45° et 65°, avec la surface d'entrée (13).

10. Pare-goutte selon la revendication 1 ou 9, dans lequel l'angle d'inclinaison (83) est variable le long de l'arête (82) depuis la pièce tubulaire vers l'axe central (26).

11. Pare-goutte selon l'une des revendications 1, 9 ou 10, dans lequel un élément de déviation (3) est agencé sur l'axe central (26).

12. Pare-goutte selon l'une des revendications 1 et 9 à 11, dans lequel les surfaces conductrices sont agencées entre un cercle intérieur (22) ainsi qu'un cercle extérieur (21) autour de l'axe central et la surface de sortie (14) est plus petite que la surface annulaire entre les deux cercles, de sorte qu'une circulation en rotation autour de l'axe central (26) peut être induite dans le flux de gaz sur la base d'un effet combiné de l'élément de déviation (3) et des surfaces conductrices (2).

13. Pare-goutte selon la revendication 12, dans lequel les surfaces conductrices (2) sont chacune coudées autour de deux points de torsion (23, 24) en aval à partir d'un plan, étant entendu qu'une moitié des points de torsion (23) sont agencés sur un premier polygone régulier sur le cercle extérieur (21) et l'autre moitié des points de torsion (24) sont agencés sur un deuxième polygone régulier sur le cercle intérieur (22).

14. Pare-goutte selon la revendication 1, dans lequel les perçages en forme de fentes (4) sont réalisés au moyen d'un procédé de découpe au laser, par découpage par électroérosion à l'aide d'un fil ou par estampage.

15. Pare-goutte selon l'une des revendications 1 et 9 à 14, dans lequel chaque surface conductrice (2) est courbée ou présente au moins deux surfaces partielles planes qui sont inclinées l'une par rapport à l'autre.

16. Pare-goutte selon l'une des revendications 11 à 15, dans lequel l'élément de déviation (3) est de forme conique et présente un angle de pointe qui correspond aux arêtes supérieures (40) des surfaces conductrices (2) qui sont formées par des sections radiales des perçages en forme de fentes (4), de sorte qu'une ligne de contact (89) entre l'élément de déviation (3) et les arêtes est à chaque fois produite dans la zone centrale entourée par la surface de sortie.
